# EUROPEAN PATENT APPLICATION

(11) **EP 4 699 870 A1**
(43) Date of publication of application: **25.02.2026**
(21) Application number: 25196434.2
(22) Date of filing: 18.08.2025
(51) Int. Cl.: B60R 21/013, B60W 40/112, B60W 30/04

(54) **ROLLOVER DETECTION METHOD AND VEHICLE**

(30) Priority: 20.08.2024 JP 2024139274
(71) Applicant: Kawasaki Motors, Ltd., Akashi, Hyogo 673-8666 (JP)
(72) Inventor: MORITAKE, Toshiyuki, Akashi-shi, Hyogo, 673-8666 (JP)
(74) Representative: Witte, Weller & Partner Patentanwälte mbB

(57) **Abstract**

A rollover detection method includes: obtaining a detection result from a first sensor (50) that detects an amount of swing displacement of a swing body (51) that swings in response to a change in an attitude of a vehicle (1); obtaining a detection result from at least one second sensor (60) that detects estimation information for estimating a state of the vehicle (1) independently of the first sensor (50); determining that the vehicle (1) has rolled over upon determining that the amount of swing displacement of the swing body (51) satisfies a predetermined rollover criterion based on the detection result of the first sensor (50); and correcting the rollover criterion based on the detection result of the second sensor (60).

## Description

### BACKGROUND OF THE INVENTION

### FIELD OF THE INVENTION

The present invention relates to a rollover detection method for detecting vehicle rollover and a vehicle.

### DESCRIPTION OF THE RELATED ART

Japanese Laid-Open Patent Application Publication No. 2011-121529 discloses a vehicle rollover sensor that detects rollover of a vehicle based on the angular displacement of a pendulum.

With the rollover detection method described in Japanese Laid-Open Patent Application Publication No. 2011-121529, the vehicle could, depending on the road condition or how the vehicle is being maneuvered, be erroneously determined to be in a rollover state when in fact the vehicle has not rolled over.

### SUMMARY OF THE INVENTION

An object of one aspect of the present invention is to provide a rollover detection method with improved accuracy of rollover detection and a vehicle.

A rollover detection method according to one aspect of the present invention includes: obtaining a detection result from a first sensor that detects an amount of swing displacement of a swing body that swings in response to a change in an attitude of a vehicle; obtaining a detection result from at least one second sensor that detects estimation information for estimating a state of the vehicle independently of the first sensor; determining that the vehicle has rolled over upon determining that the amount of swing displacement of the swing body satisfies a predetermined rollover criterion based on the detection result of the first sensor; and correcting the rollover criterion based on the detection result of the second sensor.

### BRIEF DESCRIPTION OF THE DRAWINGS

FIG. 1 is a side view showing an example of the configuration of a vehicle, in particular a motorcycle, according to an embodiment;
FIG. 2 is a block diagram showing examples of the configurations of control circuitry and processing circuitry according to the embodiment;
FIG. 3 is a flowchart showing an example of a rollover detection process performed by the processing circuitry according to the embodiment;
FIG. 4 shows an example of a correction process performed by the processing circuitry according to the embodiment to correct a second swing threshold;
FIG. 5 shows an example of a correction process performed by the processing circuitry according to the embodiment to correct the second swing threshold in the case where the vehicle rolls over when moving at a low speed;
FIG. 6 shows an example of a correction process performed by the processing circuitry according to the embodiment to correct the second swing threshold in the case where the vehicle rolls over when moving at a high speed;
FIG. 7 is a block diagram showing examples of the configurations of control circuitry and processing circuitry according to Variant 1; and
FIG. 8, like FIG. 4, shows an example of a correction process performed by the processing circuitry to correct a first swing threshold.

### DETAILED DESCRIPTION

Hereinafter, an exemplary embodiment of the present invention will be described with reference to the drawings. The embodiment described below is a generic or specific example. Some elements in the embodiment described below are not included in the appended independent claims that define the most generic concept of the present invention, and these elements are described as optional elements. The figures in the accompanying drawings are schematic diagrams, in which the elements are not necessarily precisely depicted. Elements that are substantially the same are denoted by the same reference signs throughout the drawings, and repeated descriptions of such elements may be omitted or simplified.

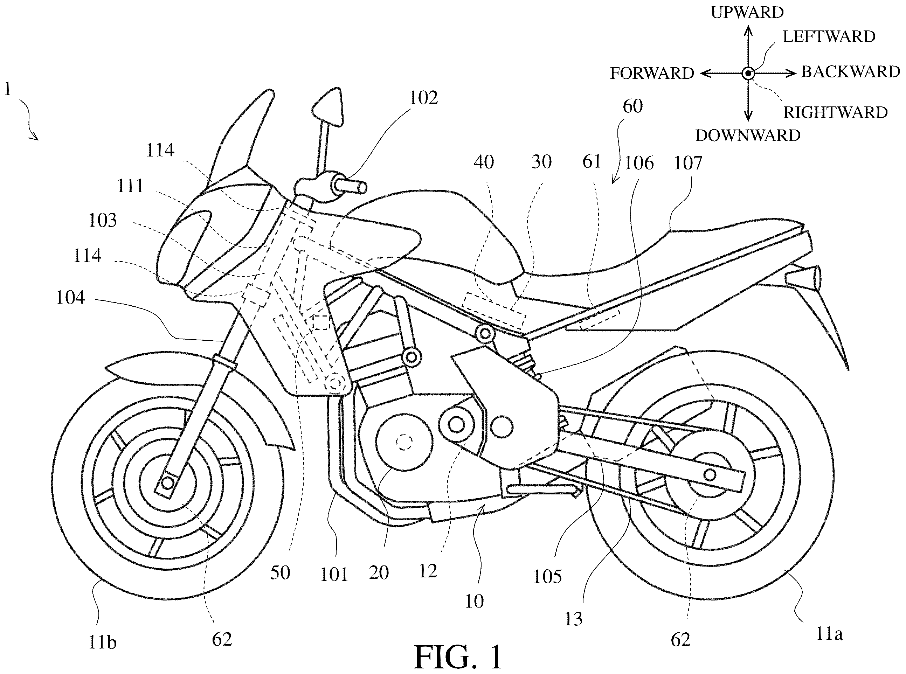

A vehicle 1 according to an exemplary embodiment will be described with reference to FIG. 1. The vehicle 1 includes: a drive structure 10 that moves the vehicle 1; a prime mover 20 that drives the drive structure 10 by transmitting drive power to the drive structure 10; and control circuitry 30 that controls the operation of the prime mover 20. The vehicle 1 further includes processing circuitry 40 that performs a process to determine whether the vehicle 1 has rolled over.

In the present embodiment, the vehicle 1 is a motorcycle. The drive structure 10 of the motorcycle may include three or less wheels. Examples of the motorcycle include: a straddle vehicle including a foot bar located lateral to the seat of the vehicle; and a scooter vehicle including a footrest located ahead of the seat of the vehicle. The vehicle 1 embodied as a motorcycle is a lean vehicle that tilts while turning.

The prime mover 20 is an internal combustion engine. The internal combustion engine generates drive power by repeating explosive combustion of an air-fuel mixture of the fuel and air in cylinders. The internal combustion engine converts explosive combustion-induced reciprocating motion of a piston to rotational motion of a crankshaft and transmits the rotational power of the crankshaft outside the internal combustion engine. The rotational power transmitted to the drive structure 10 may be transmitted to a drive wheel of the wheels included in the drive structure 10, and the drive wheel may be driven by the rotational power to move the vehicle 1.

The vehicle 1, which is a motorcycle, includes a front wheel 11b and a rear wheel 11a. The rear wheel 11a is a drive wheel, and the front wheel 11b is a non-drive wheel. The vehicle 1 further includes a vehicle body frame 101, a handlebar 102, a steering shaft 103, a pair of left and right front forks 104, a swing arm 105, a rear suspension 106, and a seat 107. Upper potions of the front forks 104 are coupled to a pair of brackets 114 spaced from each other in the upward/downward direction, and lower portions of the front forks 104 rotatably support the front wheel 11b. The brackets 114 are connected to the steering shaft 103 supporting the handlebar 102. The steering shaft 103 is supported by a head pipe 111 constituting a part of the vehicle body frame 101 and is angularly movable.

The swing arm 105 supports the rear wheel 11a, extends in the forward/backward direction, and is pivotally supported by the vehicle body frame 101. The rear suspension 106 is connected to the swing arm 105 and the vehicle body frame 101. The seat 107, on which the operator is seated, is mounted on an upper portion of the vehicle body frame 101. The prime mover 20 is located in a space lying between the front wheel 11b and the rear wheel 11a and surrounded by the vehicle body frame 101 and is secured at a plurality of points to the vehicle body frame 101. The vehicle 1 may include, as components of the drive structure 10, a transmission 12 and a power transmission component 13 that transmit drive power generated by the prime mover 20 to the rear wheel 11a. Examples of the power transmission component 13 may include a chain, a belt, and a gear.

An example of a rollover state of the vehicle 1 which is a motorcycle as described above is a state in which the vehicle 1 is tilted with its vehicle body having a portion in contact with a ground surface and cannot move ahead using the rear wheel 11a. In the specification and the claims, the vehicle body of the vehicle 1 may include any portion of the vehicle 1 other than the front wheel 11b and the rear wheel 11a.

In the specification, the upward, downward, forward, backward, leftward, and rightward directions are those defined with respect to the vehicle 1 placed upright on a ground surface extending horizontally. The upward direction refers to the direction from the ground surface toward the vehicle 1, and the downward direction refers to the direction from the vehicle 1 toward the ground surface. The forward direction refers to the direction in which the vehicle 1 moves ahead. The backward, leftward, and rightward directions refer to those defined with respect to the operator sitting astride the vehicle 1 placed upright on the ground surface.

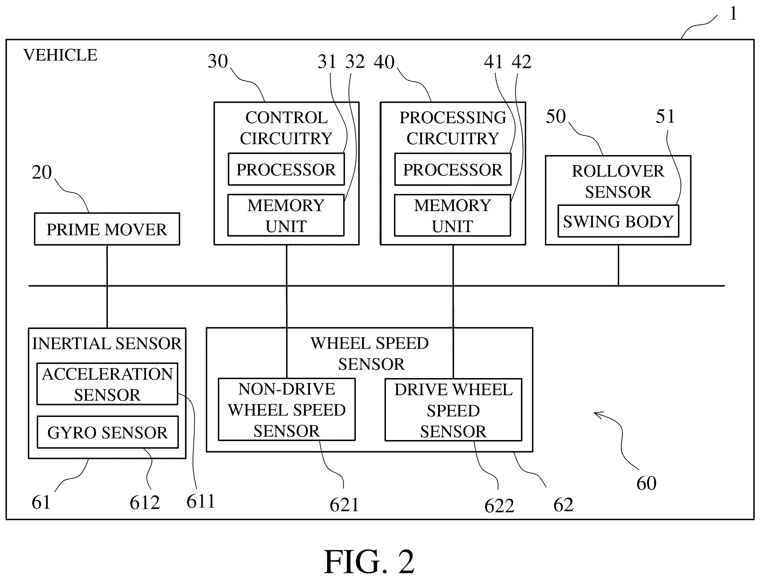

FIG. 2 is a block diagram showing examples of the configurations of the control circuitry 30 and the processing circuitry 40 according to the embodiment. As shown in FIG. 2, the vehicle 1 includes a first sensor 50. The vehicle 1 includes a rollover sensor as the first sensor 50. Hereinafter, the "first sensor 50" may be referred to as the "rollover sensor 50". The rollover sensor 50 includes a swing body 51 that swings in response to a change in the attitude of the vehicle body of the vehicle 1 in the leftward/rightward direction. The rollover sensor 50 may output a signal indicating that the amount of swing displacement of the swing body 51 is equal to or greater than a given threshold or a signal indicating the amount of swing displacement of the swing body 51. For example, upon determining that the amount of swing displacement of the swing body 51 has remained equal to or greater than the given threshold for a period of time equal to or longer than a predetermined period of time based on the signal provided from the rollover sensor 50, the processing circuitry 40 determines that the vehicle 1 has rolled over.

The vehicle 1 further includes at least one second sensor 60 having a different structure from the rollover sensor 50. The principle on which the second sensor 60 detects a physical quantity differs from that on which the rollover sensor 50 detects a physical quantity. The state of the vehicle 1 indicated by a parameter of the vehicle 1 detected by the second sensor 60 differs from the state of the vehicle 1 indicated by the parameter detected by the rollover sensor 50. That is, the second sensor 60 detects estimation information for estimating the state of the vehicle 1, and the state of the vehicle 1 estimated by using the estimation information detected by the second sensor 60 differs from the state of the vehicle 1 estimated by using information detected by the rollover sensor 50.

In the present embodiment, there are a plurality of second sensors 60, one of which is an inertial sensor 61 and another of which is a wheel speed sensor 62. The inertial sensor 61 detects an inertial force acting on the vehicle body of the vehicle 1. The wheel speed sensor 62 detects wheel speeds which are the rotational speeds of the front wheel 11b and the rear wheel 11a.

The processing circuitry 40, the control circuitry 30, various sensors included in the vehicle 1, various actuators included in the vehicle 1, and various electric components included in the vehicle 1 may be connected to one another and communicate with one another via a communication network such as CAN (Controller Area Network) built in the vehicle 1. The vehicle 1 may include an electronic control unit (ECU) that performs the functionality of the control circuitry 30 and the processing circuitry 40.

The processing circuitry 40 is configured to determine whether the vehicle 1 has rolled over based on detection results of the first sensor 50 and the second sensor 60. The processing circuitry 40 is configured to, upon determining that the vehicle 1 has rolled over, transmit a predetermined rollover-handling operation command to the control circuitry 30. For example, upon determining that the vehicle 1 has rolled over, the processing circuitry 40 transmits a command to stop the prime mover 20 as the rollover-handling operation command to the control circuitry 30. This can prevent the prime mover 20 from continuing its operation in the rollover state.

In the present embodiment, the processing circuitry 40 includes a processor 41 and a memory, although this is not limiting. The processing circuitry 40 may include a storage mounted in or separate from the processing circuitry 40. The memory and the storage will be collectively referred to as a "memory unit 42". Part of the memory unit 42 may be located outside and connected to the processing circuitry 40.

Likewise, in the present embodiment, the control circuitry 30 includes a processor 31 and a memory, although this is not limiting. The control circuitry 30 may include a storage mounted in or separate from the control circuitry 30. The memory and the storage will be collectively referred to as a "memory unit 32". Part of the memory unit 32 may be located outside and connected to the control circuitry 30. The functionality of the control circuitry 30 may include part or all of the functionality of the processing circuitry 40.

Each of the processors carries out a function, a method, or a combination thereof which is implemented by codes or instructions included in a program stored in the storage. Examples of the processors may include CPUs (central processing units), MPUs (Micro Processing Units), GPUs (Graphics Processing Units), microprocessors, processor cores, multiprocessors, ASICs (Application-Specific Integrated Circuits), and FPGAs (Field Programmable Gate Arrays). Each of the processors may implement the procedures as disclosed herein by a logic circuit or a special purpose circuit formed on an IC (Integrated Circuit) chip or an LSI (Large Scale Integration). These circuits may be embodied as one or more integrated circuits. Different procedures may be implemented by one integrated circuit.

The memory temporarily stores a program loaded from the storage and provides a work area to the processor. The memory temporarily holds various kinds of data generated while the processor is executing the program. Examples of the memory include semiconductor memories such as a RAM (Random Access Memory) and a ROM (Read Only Memory).

The storage stores a program and various kinds of data. Examples of the storage include an HDD (Hard Disk Drive), an SSD (Solid State Drive), and a semiconductor memory such as a flash memory.

Part or all of the functionality of each of the control circuitry 30 and the processing circuitry 40 may be implemented by software functionality implemented by the processor and the memory, special purpose hardware circuitry such as electronic circuitry or integrated circuitry, or a combination of the software functionality and the hardware circuitry.

The rollover sensor 50 is a sensor that can detect the attitude of the vehicle 1 in the rollover state, and any known sensor may be used as the rollover sensor 50. In the present embodiment, the rollover sensor 50 detects the amount of leftward/rightward swing displacement of the vehicle 1 by detecting the position of the swing body 51. The swing body 51 functions as a passive pendulum. That is, the swing body 51 is at rest when the vehicle 1 is at rest, and can swing in response to a change in the attitude of the vehicle 1 or an inertial force acting on the vehicle 1. The rollover sensor 50 detects the amount of swing displacement that the swing body 51 undergoes in response to the motion of the vehicle 1, and outputs the detection result to the processing circuitry 40.

For example, when the vehicle body of the vehicle 1 swings in the leftward/rightward direction, the swing body 51 physically swings and changes its positional relationship with the vertical direction. The rollover sensor 50 may be structured to permit swing of the swing body 51 in the leftward/rightward direction of the vehicle 1. In this case, the amount of swing displacement of the swing body 51 corresponds to the amount of leftward/rightward tilt of the vehicle 1. The rollover sensor 50 may detect the amount of leftward/rightward tilt of the vehicle 1 based on the amount of swing displacement of the swing body 51.

For example, the swing body 51 may be structured to swing about a pivot. Specifically, the swing body 51 may have a pendulum structure in which the swing body 51 is suspended from a pivot or a structure in which a pivot extends through the swing body 51. In the latter case, the pivot may extend through a point different from the center of gravity of the swing body 51.

For example, the rollover sensor 50 may be structured such that the electric output of the rollover sensor 50 changes once the swing body 51 swings beyond a given swing displacement threshold and comes into contact with a wall. Alternatively, the swing body 51 may be a magnetic body, and the rollover sensor 50 may be structured to use a Hall IC element to detect a magnetic field change induced by swing of the magnetic swing body 51.

Depending on predetermined travel conditions of the vehicle 1, the rollover sensor 50 could mistake a non-rollover state for the rollover state. For example, in a case that the upward/downward vibration of the vehicle 1 traveling on a rough road surface undesirably causes the swing body 51 to swing leftward and rightward, the processing circuitry 40 could erroneously determine the vehicle 1 to be in the rollover state if the determination of whether the vehicle 1 has rolled over is made only based on the output signal from the rollover sensor 50.

The at least one second sensor 60 detects estimation information for estimating a state of the vehicle 1 and outputs the detection result to the processing circuitry 40 or the control circuitry 30 or both. The state of the vehicle 1 may be a state correlated with rollover of the vehicle 1.

For example, the state of the vehicle 1 may be a state in which the moving vehicle 1 is upright or not upright. In a case that the vehicle 1 is moving in an upright state, it is highly probable that the vehicle 1 has not rolled over; thus, such a state of the vehicle 1 is correlated with rollover of the vehicle 1.

In a case that the vehicle 1 is moving in an upright state, the leftward/rightward force acting on the vehicle 1 decreases as the attitude of the vehicle 1 comes close to the vertical upright attitude.

In the vehicle 1 which is a motorcycle, the radius of curvature of the wheel cross-section, namely the radius of curvature of the contact patch, is greater in the rear wheel 11a than in the front wheel 11b even when the front wheel 11b and the rear wheel 11a have the same outer diameter dimensions. For example, the greater the amount of leftward/rightward tilt of the vehicle 1, the greater the extent to which the diameter of the rear wheel 11a is larger than the diameter of the front wheel 11b, and the greater the difference in wheel speed between the front wheel 11b and the rear wheel 11a.

Thus, the state of the vehicle 1 which is to be estimated may be a state related to the behavior of the vehicle 1, such as the attitude assumed by or a force acting on the vehicle 1 while the vehicle 1 is moving. Thus, the at least one second sensor 60 may include a sensor for travel control that is used to control the behavior of the vehicle 1 while the vehicle 1 is moving.

The inertial sensor 61, which is one of the second sensors 60, outputs a detection result as the estimation information to the processing circuitry 40. The inertial sensor 61 is a sensor for travel control. The inertial sensor 61 includes an acceleration sensor 611 and may further include a gyro sensor 612. The acceleration sensor 611 detects forces acting along two or three detection axes crossing each other. The detection axes may be orthogonal to each other. In the present embodiment, the acceleration sensor 611 detects at least a force acting along a detection axis extending in the leftward/rightward direction of the vehicle 1 and a force acting along a detection axis extending in the upward/downward direction of the vehicle 1, although this is not limiting. The gyro sensor 612 detects angular velocities or angular accelerations about two or three detection axes crossing each other. The detection axes may be orthogonal to each other and may be the same as those along which the acceleration sensor 611 detects the acting forces.

As described above, the inertial sensor 61 detects inertial forces or gravity acting in the directions in which predetermined detection axes extend and inertial forces acting in the rotational directions about predetermined detection axes. For example, the inertial sensor 61 may include a stator and an oscillator that actively oscillates with a constant period irrespective of the motion of the vehicle 1. The inertial sensor 61 may output the linear and angular velocities of inertial force- or gravity-induced motion of the oscillator in the form of changes in the capacitance between an oscillator-side electrode and a stator-side electrode.

Based on a detection result of the second sensor 60, the processing circuitry 40 estimates the probability that the vehicle 1 is kept moving by rotation of the rear wheel 11a which is a drive wheel. In the state in which the vehicle 1 is kept moving by rotation of the rear wheel 11a, it is highly probable that the vehicle 1 has not rolled over. Thus, the state in which the vehicle 1 is kept moving by rotation of the rear wheel 11a is correlated with a non-rollover state of the vehicle 1. As such, by estimating the probability that the vehicle 1 has not rolled over, the processing circuitry 40 can estimate the probability that the vehicle 1 is kept moving by rotation of the rear wheel 11a.

The processing circuitry 40 may estimate the probability that the vehicle 1 has not rolled over based on a detection result of the inertial sensor 61. In the present embodiment, the processing circuitry 40 detects a leftward/rightward force acting on the vehicle 1 based on a detection result of the inertial sensor 61, and estimates the probability that the vehicle 1 has not rolled over based on the leftward/rightward force. The leftward/rightward force acting on the vehicle 1 is a force acting horizontally in the leftward/rightward direction of the vehicle 1.

The processing circuitry 40 may estimate the attitude of the vehicle 1 based on the detection result of the angular velocities or angular accelerations about the detection axes of the inertial sensor 61. The processing circuitry 40 may estimate the leftward/rightward force acting on the vehicle 1 based on the attitude of the vehicle 1 and the detection result of the accelerations along the detection axes of the inertial sensor 61. The processing circuitry 40 may detect a deviation of the current attitude of the vehicle 1 from the vertical upright attitude of the vehicle 1.

The processing circuitry 40 may estimate the probability that the vehicle 1 has not rolled over based on the magnitude of the leftward/rightward force acting on the vehicle 1. For example, the leftward/rightward force acting on the vehicle 1 is zero when the vehicle 1 is not making any turn, namely, when the vehicle 1 is subjected to no centrifugal force. Thus, in a case that the vehicle 1 keeps traveling and the leftward/rightward force is 0, the probability that the vehicle 1 has not rolled over can be estimated to be high.

In a case that the magnitude of the leftward/rightward force is 0 or equal to or less than a first threshold T1 close to 0, the processing circuitry 40 may estimate that there is a high probability that the vehicle 1 has not rolled over. The first threshold T1 is greater than 0. The processing circuitry 40 may estimate that there is a high probability that the vehicle 1 has not rolled over in a case that the state in which the magnitude of the leftward/rightward force is 0 or equal to or less than the first threshold T1 continues over an estimation period ta which is a predetermined period of time.

The processing circuitry 40 may estimate a determination value C1 based on the magnitude of the leftward/rightward force. The determination value C1 indicates the probability that the vehicle 1 has not rolled over. The higher the probability that the vehicle 1 keeps traveling and has not rolled over, the higher the determination value C1 may be. In the present embodiment, the determination value C1 is a positive value indicating that there is a probability that the vehicle 1 has not rolled over. The determination value C1 may indicate that there is a probability that the vehicle 1 has rolled over; in this case, the determination value C1 may be a negative value. The determination value C1 may be a percentage or fraction indicating the probability that the vehicle 1 has not rolled over. The processing circuitry 40 may estimate whether the vehicle 1 is in a non-rollover state based on whether the determination value C1 is greater than a predetermined threshold.

In a case that the absolute value of the leftward/rightward force is 0 or equal to or less than the first threshold T1, the processing circuitry 40 may assign a maximum value such as 100% to the determination value C1. The processing circuitry 40 may assign the maximum value to the determination value C1 in a case that the state in which the absolute value of the leftward/rightward force is 0 or equal to or less than the first threshold T1 continues over the estimation period ta which is a predetermined period of time. The processing circuitry 40 may determine the determination value C1 in such a manner that the determination value C1 decreases with increasing absolute value of the leftward/rightward force. The processing circuitry 40 may correct the determination value C, for example, based on an integral, a past trend, or a temporal change of the leftward/rightward force or on a combination of two or more of the integral, the past trend, and the temporal change. The processing circuitry 40 may determine that the vehicle 1 has not rolled over in a case that the determination value C1 is greater than a predetermined threshold.

In the present embodiment, the wheel speed sensor 62 includes: a non-drive wheel speed sensor 621 that detects the rotational speed of the front wheel 11b which is a non-drive wheel of the vehicle 1; and a drive wheel speed sensor 622 that detects the rotational speed of the rear wheel 11a which is a drive wheel of the vehicle 1. Examples of the non-drive wheel speed sensor 621 and the drive wheel speed sensor 622 may include electromagnetic pick-up rotation sensors, AMR (Anisotropic-Magneto-Resistive) rotation sensors, Hall IC rotation sensors, and mechanical, optical, magnetic, or electromagnetic induction encoders. The wheel speed sensor 62 outputs a detection result as the estimation information to the processing circuitry 40. The wheel speed sensor 62 is a sensor for travel control.

The processing circuitry 40 may estimate the probability that the vehicle 1 has not rolled over based on the detection result of the wheel speed sensor 62. The processing circuitry 40 may detect a front wheel linear speed based on the detection result of the non-drive wheel speed sensor 621. The front wheel linear speed is the speed at which the vehicle 1 is moved by the front wheel 11b. The processing circuitry 40 may detect a rear wheel linear speed based on the detection result of the drive wheel speed sensor 622. The rear wheel linear speed is the speed at which the vehicle 1 is moved by the rear wheel 11a. The control circuitry 30 can control the prime mover 20 to output suitable drive power in accordance with the vehicle 1's travel speed determined based on the detection result of the non-drive wheel speed sensor 621. In the present embodiment, the travel speed of the vehicle 1 corresponds to the front wheel linear speed.

The processing circuitry 40 may estimate the probability that the vehicle 1 has not rolled over based on the detection results of the non-drive wheel speed sensor 621 and the drive wheel speed sensor 622. In this case, based on the detection results, the processing circuitry 40 detects a rotational speed difference between the front wheel 11b and the rear wheel 11a or a linear speed difference between the front wheel linear speed and the rear wheel linear speed. Specifically, the processing circuitry 40 may calculate a slip ratio using the front and rear wheel rotational speeds or the front and rear wheel linear speeds. The slip ratio can be expressed as "(front wheel linear speed - rear wheel linear speed)/rear wheel linear speed)". In particular, when the front wheel 11b and the rear wheel 11a have the same outer diameter, the slip ratio can be expressed as "(front wheel rotational speed - rear wheel rotational speed)/rear wheel rotational speed".

For example, when the rotational speed difference or linear speed difference between the front and rear wheels is small, that is to say, when the absolute value of the slip ratio is small, it is highly probable that the vehicle 1 is traveling without rolling over. Hereinafter, the "rotational speed difference between the front and rear wheels" and the "linear speed difference between the front and rear wheels" may be collectively referred to as the "wheel speed difference". In a case that the wheel speed difference or the slip ratio is small, the processing circuitry 40 estimates that there is a high probability that the vehicle 1 has not rolled over. The estimated probability increases with a decrease in the wheel speed difference or the absolute value of the slip ratio.

The slip ratio increases with decreasing rotational speed of the rear wheel 11a which is a drive wheel, even when the wheel speed difference remains small. Thus, in the case of using the slip ratio as a basis for estimation, the threshold for determining that the vehicle 1 has not rolled over may be corrected in accordance with the travel speed or the drive wheel rotational speed. Specifically, the threshold is preferably corrected such that the smaller the absolute value of the slip ratio, the higher the estimated probability that the vehicle 1 has not rolled over and that the lower the travel speed or the drive wheel rotational speed, the lower the estimated probability that the vehicle 1 has not rolled over.

In a case that the absolute value of the slip ratio is 0 or equal to or less than a second threshold T2 and the travel speed of the vehicle 1 is equal to or greater than a third threshold T3, the processing circuitry 40 may estimate that there is a high probability that the vehicle 1 has not rolled over. The second threshold T2 is greater than 0 and may be close to 0. In a case that the state in which the absolute value of the slip ratio is 0 or equal to or less than the second threshold T2 and the travel speed of the vehicle 1 is equal to or greater than the third threshold T3 continues over the estimation period ta, the processing circuitry 40 may estimate that there is a high probability that the vehicle 1 has not rolled over.

The processing circuitry 40 may estimate a determination value CA based on the slip ratio and the travel speed of the vehicle 1. The determination value CA indicates the probability that the vehicle 1 has not rolled over. In the present embodiment, the determination value CA is expressed using a determination value C2 related to the slip ratio and a determination value C3 related to the travel speed, although this is not limiting. The determination value CA, C2, or C3 may be a percentage or fraction indicating the probability that the vehicle 1 has not rolled over. In the present embodiment, the determination values C2 and C3 are positive values indicating that there is a probability that the vehicle 1 has not rolled over. Alternatively, the determination values C2 and C3 may be negative values indicating that there is a probability that the vehicle 1 has rolled over. The processing circuitry 40 may estimate whether the vehicle 1 is in a non-rollover state based on whether the determination value CA is greater than a predetermined threshold.

The processing circuitry 40 may assign a maximum value such as 100% to the determination value C2 in a case that the absolute value of the slip ratio is 0 or equal to or less than the second threshold T2. The processing circuitry 40 may assign the maximum value to the determination value C2 in a case that the state in which the absolute value of the slip ratio is 0 or equal to or less than the second threshold T2 continues over the estimation period ta. The processing circuitry 40 may determine the determination value C2 in such a manner that the determination value C2 decreases with increasing absolute value of the slip ratio. The processing circuitry 40 may correct the slip ratio-related determination value, for example, based on an integral, a past trend, or a temporal change of the slip ratio or on a combination of two or more of the integral, the past trend, and the temporal change.

The processing circuitry 40 may assign a maximum value such as 100% to the determination value C3 in a case that the travel speed is equal to or greater than the third threshold T3. The processing circuitry 40 assign the maximum value to the determination value C3 in a case that the state in which the travel speed is equal to or greater than the third threshold T3 continues over the estimation period ta. The processing circuitry 40 may determine the determination value C3 in such a manner that the determination value C3 decreases with decreasing travel speed from the third threshold T3. The processing circuitry 40 may correct the determination value C3, for example, based on an integral, a past trend, or a temporal change of the travel speed or on a combination of two or more of the integral, the past trend, and the temporal change.

The processing circuitry 40 may determine that the vehicle 1 is in a non-rollover state in a case that the determination value CA including the combination of the determination values C2 and C3 is greater than a predetermined threshold. For example, the determination values C2 and C3 may be combined by an arithmetic operation such as addition, multiplication, or division.

In the present embodiment, the processing circuitry 40 uses the magnitude of the leftward/rightward inertial force acting on the vehicle 1, the slip ratio of the vehicle 1, and the travel speed of the vehicle 1 to estimate the probability that the vehicle 1 has not rolled over. The processing circuitry 40 compares the absolute value of the leftward/rightward inertial force to the first threshold T1, the absolute value of the slip ratio to the second threshold T2, and the travel speed to the third threshold T3, and uses the results of comparison to estimate whether there is a high probability that the vehicle 1 has not rolled over.

Specifically, the processing circuitry 40 determines the determination value C1 based on the leftward/rightward inertial force, the determination value C2 based on the slip ratio, and the determination value C3 based on the travel speed, and determines whether the vehicle 1 is in a non-rollover state based on a determination value CB combining the three determination values C1, C2, and C3. The processing circuitry 40 may combine the three determination values C1, C2, and C3 by an arithmetic operation such as addition, multiplication, or division.

The processing circuitry 40 may assign a maximum value such as 100% to the determination value CB in a case that the absolute value of the leftward/rightward inertial force is equal to or less than the first threshold T1, the absolute value of the slip ratio is equal to or less than the second threshold T2, and the travel speed is equal to or greater than the third threshold T3. The processing circuitry 40 may determine the determination value CB in such a manner that the determination value CB decreases with increasing absolute value of the leftward/rightward inertial force from the first threshold T1, with increasing absolute value of the slip ratio from the second threshold T2, or with decreasing travel speed from the third threshold T3. The processing circuitry 40 may determine the determination value CB using the leftward/rightward inertial force, the slip ratio, and the travel speed which are detected continuously over the estimation period ta.

The following will describe the details of the operation of the processing circuitry 40 which uses detection results of the rollover sensor 50 and the at least one second sensor 60 to determine whether the vehicle 1 has rolled over. The processing circuitry 40 is configured to determine that the vehicle 1 has rolled over upon determining, based on the detection result of the rollover sensor 50, that the amount of swing displacement of the swing body 51 satisfies a predetermined rollover criterion. The processing circuitry 40 may determine whether the vehicle 1 has rolled over using the rollover criterion every predetermined determination period tb. The rollover criterion is that the amount of swing displacement of the swing body 51 remains equal to or greater than a first swing threshold Toa over a period of time equal to or greater than a second swing threshold Tob. A default value Toa0 of the first swing threshold Toa and a default value Tob0 of the second swing threshold Tob are generated in advance as default values of the rollover criterion and stored in the memory unit 42.

The processing circuitry 40 is configured to correct the rollover criterion based on a detection result of the at least one second sensor 60. The processing circuitry 40 estimates the probability that the vehicle 1 has not rolled over based on the detection result of the at least one second sensor 60, and corrects the rollover criterion based on the estimated probability.

The processing circuitry 40 may determine whether to correct the rollover criterion every predetermined correction period tc. The processing circuitry 40 may receive a detection result from the at least one second sensor 60 every predetermined detection period td. The correction period tc may be the same as or different from the determination period tb. The correction period tc is preferably equal to or shorter than the determination period tb but may be longer than the determination period tb. The detection period td is shorter than the determination period tb. The correction period tc may be the same as or different from the detection period td. The correction period tc is preferably equal to or longer than the detection period td. The estimation period ta may be the same as the determination period tb, the correction period tc, or the detection period td or may be different from all of the periods tb, tc, and td. The estimation period ta may be set in accordance with the type of the second sensor 60.

Examples of the detection period td may include a period of 10 milliseconds or less, a period of 10 to 20 milliseconds, and a period of several tens of milliseconds. Examples of the determination period tb may include a period of 100 to 200 milliseconds, a period of several hundreds of milliseconds, a period of 1 to 2 seconds, and a period of several seconds. Examples of the correction period tc may include a period of 10 milliseconds or less, a period of 10 to 20 milliseconds, a period of several tens of milliseconds, a period of 100 to 200 milliseconds, a period of several hundreds of milliseconds, a period of 1 to 2 seconds, and a period of several seconds.

Upon estimating that there is a high probability that the vehicle 1 has not rolled over, namely, a high probability that the vehicle 1 is kept moving by rotation of the rear wheel 11a, the processing circuitry 40 corrects the rollover criterion such that the vehicle 1 is less likely to be determined to have rolled over than when the estimated probability is lower. In the present embodiment, the processing circuitry 40 corrects the rollover criterion by increasing the second swing threshold Tob, although this is not limiting. The processing circuitry 40 may correct the rollover criterion by increasing the first swing threshold Toa.

Upon estimating that there is a low probability that the vehicle 1 has not rolled over, namely, a low probability that the vehicle 1 is kept moving by rotation of the rear wheel 11a, the processing circuitry 40 may correct the rollover criterion such that the vehicle 1 is more likely to be determined to have rolled over than when the estimated probability is higher. **In** this case, the processing circuitry 40 of the present embodiment corrects the rollover criterion by decreasing the second swing threshold Tob. Alternatively, the processing circuitry 40 may correct the rollover criterion by decreasing the first swing threshold Toa.

The processing circuitry 40 determines whether to correct the rollover criterion every correction period tc, and makes this determination using a detection result obtained from the at least one second sensor 60 during the correction period tc. For example, the processing circuitry 40 may determine to correct the rollover criterion based on an estimation result obtained during the correction period tc as to the probability that the vehicle 1 has not rolled over. The processing circuitry 40 may determine to correct the rollover criterion in a case that the determination value has changed during the correction period tc.

The processing circuitry 40 determines whether the detection result of the at least one second sensor 60 falls within an abnormal range outside a predetermined normal range. Upon determining that the detection result of the at least one second sensor 60 falls within the abnormal range, the processing circuitry 40 cancels the correction made to the rollover criterion and fixes the set values in the rollover criterion to the default values stored in the memory unit 42. Upon determining that the detection result of the at least one second sensor 60 falls within the abnormal range, the processing circuitry 40 may keep the current rollover criterion fixed without further correcting the rollover criterion.

For the second sensor 60 that provided the detection result falling within the abnormal range, the processing circuitry 40 determines whether the detection result of the second sensor 60 has been restored to and remained in the normal range over a predetermined release period te. Upon determining that the detection result of the second sensor 60 has remained in the normal range over a period of time equal to or longer than the release period te, the processing circuitry 40 releases the fixing of the rollover criterion and permits the correction of the rollover criterion.

The details of the correction of the rollover criterion will be described. For each of the second sensors 60, the processing circuitry 40 estimates the probability that the vehicle 1 has not rolled over based on a detection result of the second sensor 60. The processing circuitry 40 takes into account all the estimation results each of which is obtained using a corresponding one of the second sensors 60, and corrects the rollover criterion by increasing or decreasing the swing threshold based on the estimation results.

In the present embodiment, the processing circuitry 40 corrects the rollover criterion by increasing or decreasing the second swing threshold Tob, although this is not limiting. Specifically, the processing circuitry 40 sets the second swing threshold Tob by combining determination values, which indicate the probability that the vehicle 1 has not rolled over, with the default value Tob0 of the second swing threshold Tob. The processing circuitry 40 uses determination values related to estimation parameters which are parameters for estimating the probability that the vehicle 1 has not rolled over. Examples of the estimation parameters may include a force acting on the vehicle 1, the rotational speeds of the front and rear wheels of the vehicle 1, the slip ratio of the vehicle 1, the travel speed of the vehicle 1, the extension or contraction of a suspension of the vehicle 1, and the air pressure of a tire of the vehicle 1. In the present embodiment, the estimation parameters include a force acting on the vehicle 1, the slip ratio of the vehicle 1, and the travel speed of the vehicle 1.

The processing circuitry 40 corrects the second swing threshold Tob by changing a determination value based on a detection result of the at least one second sensor 60. In the present embodiment, the processing circuitry 40 corrects the second swing threshold Tob by increasing the second swing threshold Tob by a certain percentage from the default value Tob0 using a determination value.

For example, the second swing threshold Tob can be defined by the equation Tob = Tob0 × (1 + f(Ck)) wherein Tob0 is the default value of the second swing threshold and Ck is a determination value related to an estimation parameter. The determination value Ck is a fraction of 0 to 1 indicating the probability that the vehicle 1 has not rolled over. When the probability that the vehicle 1 has not rolled over is at a maximum (100%), the determination value Ck is "1", while when the probability is at a minimum (0%), the determination value Ck is "0". The letter k indicates the corresponding estimation parameter and is a natural number of 1 to n, and the letter "n" is a natural number of 1 or more.

The function f(Ck) is a function including the determination values C1 to Cn as elements. An example of the function f(Ck) is expressed as f(Ck) = C1 + C2 + . . . + Cn. In the present example, the determination values Ck are used as addends to be added to the base value "1" in the above equation, although this is not limiting. The function f(Ck) may include subtraction, multiplication, or division involving two or more of the determination values Ck. For example, a determination value Ck1 of the determination values Ck may be used as a subtrahend or minuend, a multiplier or multiplicand, or a divisor or dividend for another determination value Ck2. The determination values Ck1 and Ck2 may be determination values related to estimation parameters correlated with each other. In the present embodiment, the determination values Ck include the determination values C1, C2, and C3, although this is not limiting.

The determination value C1 related to the leftward/rightward inertial force acting on the vehicle 1 may be used as an addend in the equation expressing the second swing threshold Tob.

In a case that the leftward/rightward inertial force is 0, the determination value C1 may be set to a given value such as "1" greater than 0, while in a case that the leftward/rightward inertial force is greater than 0, the determination value C1 may be set to "0".

In a case that the absolute value of the leftward/rightward inertial force is equal to or less than the first threshold T1, the determination value C1 may be set to a given value such as "1" greater than 0, while in a case that the absolute value of the leftward/rightward inertial force is greater than the first threshold T1, the determination value C1 may be set to "0".

The determination value C1 may be set in such a manner that the determination value C1 decreases stepwise with increasing absolute value of the leftward/rightward inertial force. For example, there may be one or more determination values to which the determination value C1 can be set when the absolute value of the leftward/rightward inertial force is greater than the first threshold T1. The determination value C1 may be set to "1" when the absolute value of the leftward/rightward inertial force ranges from 0 to the first threshold T1, may be set to "0" when the absolute value of the leftward/rightward inertial force is greater than a fourth threshold T4, and may be set to a given value of greater than 0 to less than 1 when the absolute value of the leftward/rightward inertial force ranges from greater than the first threshold T1 to the fourth threshold T4. The fourth threshold T4 is greater than the first threshold T1. The processing circuitry 40 determines in which of the above three ranges the absolute value of the leftward/rightward inertial force is, and chooses a corresponding one of the three determination values as the determination value C1 related to the absolute value of the leftward/rightward inertial force. Alternatively or additionally, there may be one or more determination values to which the determination value C1 can be set when the absolute value of the leftward/rightward inertial force ranges from 0 to the first threshold T1. The processing circuitry 40 may choose one of four or more determination values associated respectively with four or more ranges of the absolute value of the leftward/rightward inertial force as the determination value C1 related to the absolute value of the leftward/rightward inertial force.

The determination value C2 related to the slip ratio of the vehicle 1 may be used as an addend in the equation expressing the second swing threshold Tob.

In a case that the slip ratio is 0, the determination value C2 may be set to a given value such as "1" greater than 0, while in a case that the absolute value of the slip ratio is greater than 0, the determination value C2 may be set to "0".

In a case that the absolute value of the slip ratio is equal to or less than the second threshold T2, the determination value C2 may be set to a given value such as "1" greater than 0, while in a case that the absolute value of the slip ratio is greater than the second threshold T2, the determination value C2 may be set to "0".

The determination value C2 may be set in such a manner that the determination value C2 decreases stepwise with increasing absolute value of the slip ratio. For example, there may be one or more determination values to which the determination value C2 can be set when the absolute value of the slip ratio is greater than the second threshold T2. The determination value C2 may be set to "1" when the absolute value of the slip ratio ranges from 0 to the second threshold T2, may be set to "0" when the absolute value of the slip ratio is greater than a fifth threshold T5, and may be set to a given value of greater than 0 to less than 1 when the absolute value of the slip ratio ranges from greater than the second threshold T2 to the fifth threshold T5. The fifth threshold T5 is greater than the second threshold T2. Alternatively or additionally, there may be one or more determination values to which the determination value C2 can be set when the absolute value of the slip ratio ranges from 0 to the second threshold T2. The processing circuitry 40 may choose one of different determination values associated respectively with different ranges of the absolute value of the slip ratio as the determination value C2 related to the absolute value of the slip ratio.

The determination value C3 related to the travel speed of the vehicle 1 is used as a multiplier by which the determination value C2 is multiplied in the equation expressing the second swing threshold Tob. The determination value C3 may be used as another kind of arithmetic element.

In a case that the travel speed, which corresponds to the front wheel linear speed of the front wheel 11b, or the rotational speed of the front wheel 11b is less than the third threshold T3, the determination value C3 may be set to "0", while in a case that the travel speed or the rotational speed of the front wheel 11b is equal to or greater than the third threshold T3, the determination value C3 may be set to a given value such as "1" greater than 0.

The determination value C3 may be set in such a manner that the determination value C3 increases stepwise with increasing travel speed or increasing rotational speed of the front wheel 11b.

For example, there may be one or more determination values to which the determination value C3 can be set when the travel speed or the rotational speed of the front wheel 11b is less than the third threshold T3. The determination value C3 may be set to "0" when the travel speed or the rotational speed of the front wheel 11b ranges from 0 to a sixth threshold T6, may be set to "1" when the travel speed or the rotational speed of the front wheel 11b is equal to or greater than the third threshold T3, and may be set to a given value of greater than 0 to less than 1 when the travel speed or the rotational speed of the front wheel 11b ranges from greater than the sixth threshold T6 to less than the third threshold T3. The sixth threshold T6 is greater than 0 and less than the third threshold T3. Alternatively or additionally, there may be one or more determination values to which the determination value C3 can be set when the travel speed or the rotational speed of the front wheel 11b is greater than the third threshold T3. The processing circuitry 40 may choose one of different determination values associated respectively with different ranges of the travel speed or the rotational speed of the front wheel 11b as the determination value C3 related to the travel speed or the rotational speed of the front wheel 11b.

In the present embodiment, the function f(Ck) may be defined as f(Ck) = C1 + C2 × C3, and the second swing threshold Tob may be defined as Tob = Tob0 × (1 + C1 + C2 × C3). According to the equation Tob = Tob0 × (1 + C1 + C2 × C3), in a case that the determination values Ck are greater than 0, the second swing threshold Tob is corrected with the determination values Ck to be greater than the default value Tob0. In a case that the determination values Ck are greater than 0, namely, in a case that there is a probability that the vehicle 1 has not rolled over, the second swing threshold Tob is corrected to be greater than the default value Tob0, and it becomes less likely that the rollover criterion will be satisfied.

The conditions under which the rollover sensor 50 accurately detects rollover of the vehicle 1 can be different from the conditions under which the second sensor 60 accurately detects that there is a high probability that the vehicle 1 has rolled over. Thus, in situations where the rollover sensor 50 could make an error in detection of whether or not the vehicle 1 has rolled over, the processing circuitry 40 supplementally corrects the swing threshold using a detection result of the second sensor 60, and thereby improves the accuracy of detection of whether or not the vehicle 1 has rolled over. For example, in a situation where the vehicle 1 undergoes low-frequency vibrations arising from the prime mover 20 or any other cause, the rollover sensor 50 could suffer a decline in detection accuracy. The detection result of the second sensor 60 is affected by the vibrations differently than the detection result of the rollover sensor 50; thus, the processing circuitry 40 uses the detection result of the second sensor 60 to reduce the occurrence of errors in detection of whether or not the vehicle 1 has rolled over.

In the present embodiment, the second sensor 60 need not be a dedicated sensor mounted in the vehicle 1 to detect rollover of the vehicle 1 and may be a sensor mounted in the vehicle 1 regardless of detection of rollover of the vehicle 1. The processing circuitry 40 uses an existing sensor of the vehicle 1 as the second sensor 60 to determine whether the vehicle 1 has rolled over. This reduces the cost of the vehicle 1.

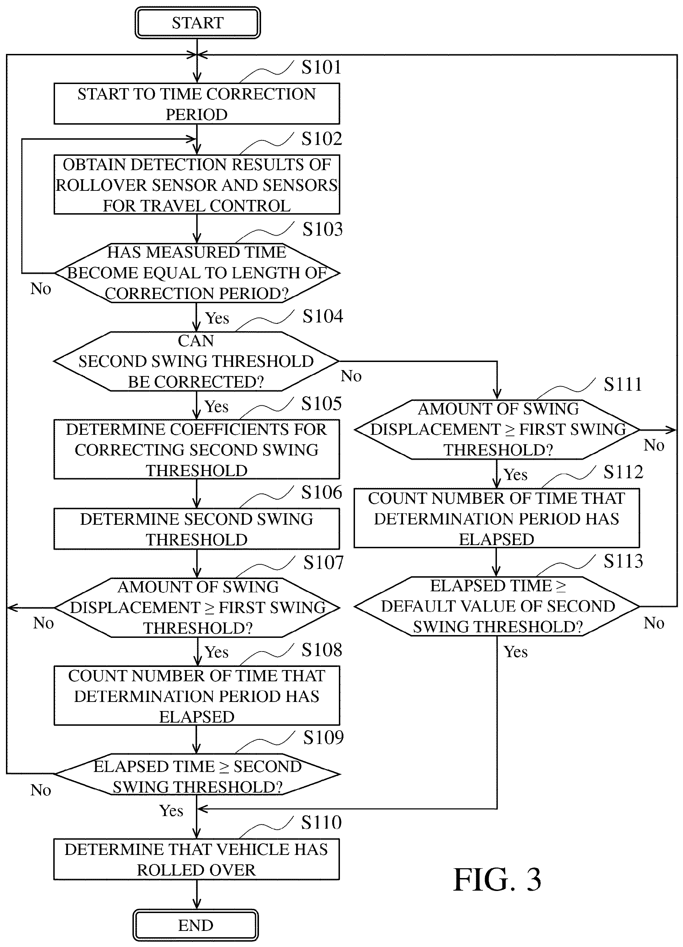

The following will describe the operation performed by the processing circuitry 40 according to the embodiment to detect rollover of the vehicle 1. FIG. 3 is a flowchart showing an example of the rollover detection process performed by the processing circuitry 40 according to the embodiment. The example of FIG. 3 is one in which the timing and length of the determination period tb are the same as those of the correction period tc.

As shown in FIG. 3, in step S101, the processing circuitry 40 starts to time the correction period tc.

In step S102, the processing circuitry 40 obtains detection results from the rollover sensor 50 and sensors for travel control which serve as the second sensors 60.

In step S103, the processing circuitry 40 determines whether the measured time has become equal to the length of the correction period tc. In a case that the measured time is less than the length of the correction period tc (No in step S103), the processing circuitry 40 returns to step S102. In a case that the measured time has become equal to the length of the correction period tc (Yes in step S103), the processing circuitry 40 proceeds to step S104.

In step S104, the processing circuitry 40 determines whether the second swing threshold Tob can be corrected. In a case that the second swing threshold Tob can be corrected (Yes in step S104), the processing circuitry 40 proceeds to step S105. In a case that the second swing threshold Tob cannot be corrected (No in step S104), the processing circuitry 40 proceeds to step S111.

The case where the second swing threshold Tob cannot be corrected is one in which the detection results of the sensors 60 for travel control include a detection result falling within an abnormal range. In such a case, the processing circuitry 40 cancels the correction made to the second swing threshold Tob, fixes the second swing threshold Tob to the default value Tob0, and disables correction of the second swing threshold Tob from the default value Tob0. After the fixing of the second swing threshold Tob, if that detection result of the sensor 60 for travel control which was in the abnormal range is restored to and remains in a normal range over a period of time equal to or longer than the release period te, the processing circuitry 40 enables correction of the second swing threshold Tob from the default value Tob0. The processing circuitry 40 may perform the process of enabling and disabling the correction concurrently with the process of detecting rollover of the vehicle 1 by means of an algorithm different from that used for the process of detecting rollover of the vehicle 1.

In step S105, using the detection results of the sensors 60 for travel control, the processing circuitry 40 determines the determination values Ck for correcting the second swing threshold Tob. That is, the processing circuitry 40 calculates the determination values related to the estimation parameters using the detection results of the sensors 60 for travel control. The processing circuitry 40 may pre-store, in the memory unit 42, a set of data including values of various estimation parameters in association with determination values.

In step S106, the processing circuitry 40 determines the second swing threshold Tob using the determined determination values. In a case that the determination values are the same as those previously determined, the second swing threshold Tob remains as previously determined. In a case that the determination values are different from those previously determined, the second swing threshold Tob is corrected to a different value.

In step S107, the processing circuitry 40 determines whether the amount of swing displacement of the swing body 51 is equal to or greater than the first swing threshold Toa. In a case that the amount of swing displacement is equal to or greater than the first swing threshold Toa (Yes in step S107), the processing circuitry 40 proceeds to step S108. In a case that the amount of swing displacement is less than the first swing threshold Toa (No in step S107), the processing circuitry 40 returns to step S101. In a case that the amount of swing displacement is less than the first swing threshold Toa, the processing circuitry 40 resets a count value to 0.
The count value refers to the number of times that the determination period tb has elapsed.

In step S108, the processing circuitry 40 counts the number of times that the determination period tb has elapsed. The processing circuitry 40 increments by 1 the count value reflecting the number of the previous determination periods tb.

In step S109, the processing circuitry 40 determines whether the elapsed time is equal to or greater than the determined second swing threshold Tob. In a case that the elapsed time is equal to or greater than the determined second swing threshold Tob (Yes in step S109), the processing circuitry 40 proceeds to step S110. In a case that the elapsed time is less than the determined second swing threshold Tob (No in step S109), the processing circuitry 40 returns to step S101.

In step S110, the processing circuitry 40 determines that the vehicle 1 has rolled over.

In step S111, the processing circuitry 40 determines whether the amount of swing displacement of the swing body 51 is equal to or greater than the first swing threshold Toa. In a case that the amount of swing displacement is equal to or greater than the first swing threshold Toa (Yes in step S111), the processing circuitry 40 proceeds to step S112. In a case that the amount of swing displacement is less than the first swing threshold Toa (No in step S111), the processing circuitry 40 returns to step S101. In a case that the amount of swing displacement is less than the first swing threshold Toa, the processing circuitry 40 resets the count value of the determination period tb to 0.

In step S112, the processing circuitry 40 counts the number of times that the determination period tb has elapsed. The processing circuitry 40 increments by 1 the count value reflecting the number of the previous determination periods tb.

In step S113, the processing circuitry 40 determines whether the elapsed time is equal to or greater than the default value Tob0 to which the second swing threshold Tob has been set. The elapsed time is the product of multiplication of the length of the determination period tb by the count value of the determination period tb. In a case that the elapsed time is equal to or greater than the default value Tob0 (Yes in step S113), the processing circuitry 40 proceeds to step S110. In a case that the elapsed time is less than the default value Tob0 (No in step S113), the processing circuitry 40 returns to step S101.

In steps S101 to S113, the processing circuitry 40 determines whether to enable or disable correction of the second swing threshold Tob and corrects the second swing threshold Tob depending on the determination result. The processing circuitry 40 performs this determination and correction every correction period tc regardless of whether the amount of swing displacement detected by the rollover sensor 50 is equal to or greater than the first swing threshold Toa. In a case that the amount of swing displacement detected by the rollover sensor 50 is equal to or greater than the first swing threshold Toa, the processing circuitry 40 can use the corrected second swing threshold Tob to determine whether the vehicle 1 has rolled over. The processing circuitry 40 can correct the second swing threshold Tob in accordance with the state of the vehicle 1, and by using the corrected second swing threshold Tob, the processing circuitry 40 can accurately determine whether the vehicle 1 has rolled over. Furthermore, in a case that any of the detection results of the sensors 60 for travel control has an abnormality, the processing circuitry 40 uses the default value Tob0 without correcting the second swing threshold Tob. This can reduce the occurrence of errors in determination of whether the vehicle 1 has rolled over.

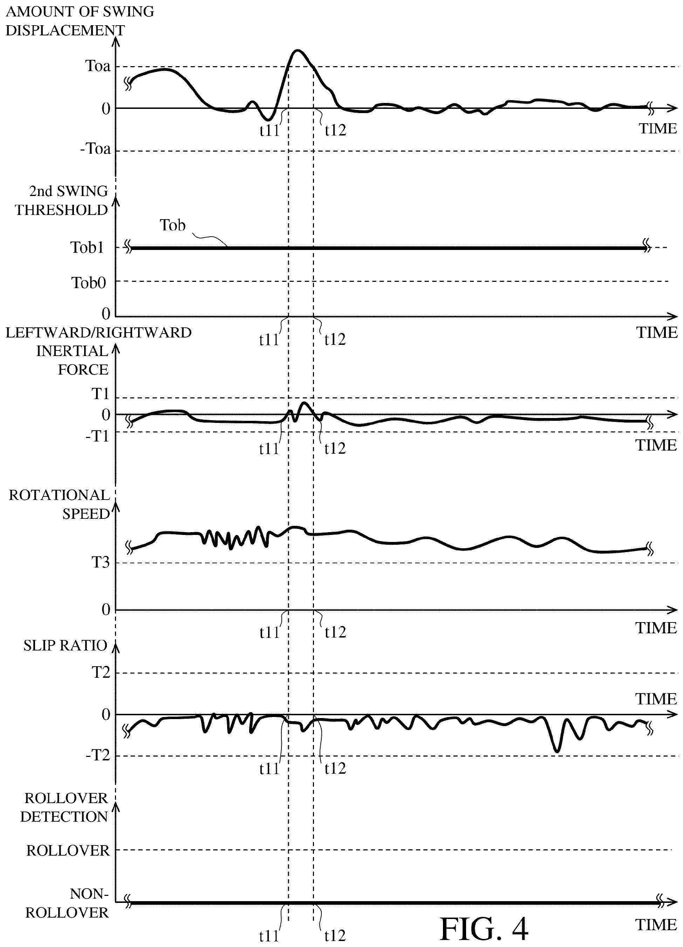

The following will describe an example of the process performed by the processing circuitry 40 according to the embodiment to detect rollover of the vehicle 1. FIG. 4 shows an example of the process performed by the processing circuitry 40 according to the embodiment to correct the second swing threshold Tob. FIG. 4 shows a case where the vehicle 1 is moving on a rough road surface without rolling over. As shown in FIG. 4, at a time point t11, the rollover sensor 50 detects an amount of swing displacement whose absolute value is equal to or greater than the first swing threshold Toa. This large amount of swing displacement is due to the movement of the vehicle 1 on the rough road surface. Before and after the time point t11, the absolute value of the leftward/rightward inertial force is equal to or less than the first threshold T1, the rotational speed of the front wheel 11b is equal to or greater than the third threshold T3, and the absolute value of the slip ratio is equal to or less than the second threshold T2. Thus, before the time point t11, the processing circuitry 40 corrects the second swing threshold Tob to a value Tob1 greater than the default value Tob0 and maintains the second swing threshold Tob at the value Tob1.

During the period (t12 - t11) from the time point t11 to the time point t12, the absolute value of the amount of swing displacement is equal to or greater than the first swing threshold Toa. Although the default value Tob0 of the second swing threshold Tob is less than the length of the period (t12 - t11), the processing circuitry 40 determines that the vehicle 1 has not rolled over since the corrected second swing threshold Tob1 is greater than the length of the period (t12 - t11). Thus, the processing circuitry 40 can accurately determine whether the vehicle 1 has rolled over even in the case where the vehicle 1 would be erroneously determined to have rolled over if the determination is based only on the amount of swing displacement of the vehicle 1.

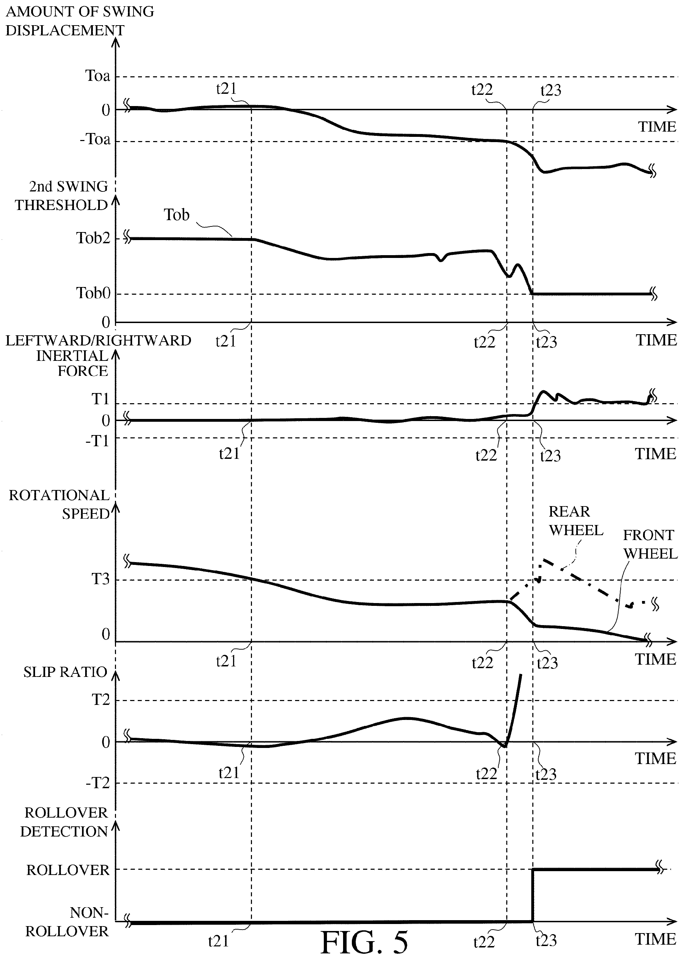

FIG. 5 shows an example of the process performed by the processing circuitry 40 according to the embodiment to correct the second swing threshold Tob in the case where the vehicle 1 rolls over when moving at a low speed. The low speed is preferably 30 km/h or less and more preferably 20 km/h or less. In the event that the rear wheel 11a slips relative to the road surface, the vehicle 1 could rollover depending on the situation. As shown in FIG. 5, at a time point t22, the vehicle 1 experiences a phenomenon called slip-down in which the rear wheel 11a slips relative to the road surface. After that, at a time point t23, the vehicle 1 falls into the rollover state in which the vehicle body is in contact with the ground.

Until a time point t21 before the time point t22, the absolute value of the leftward/rightward inertial force is equal to or less than the first threshold T1, the rotational speed of the front wheel 11b is equal to or greater than the third threshold T3, and the absolute value of the slip ratio is equal to or less than the second threshold T2. Thus, the processing circuitry 40 sets and maintains the second swing threshold Tob at a value Tob2 greater than the default value Tob0.

In the present example, the third threshold T3 corresponds to a travel speed of 20 km/h. The determination value C3 is 0 in a case that the rotational speed of the front wheel 11b is less than the third threshold T3, and is 1 in a case that the rotational speed of the front wheel 11b is equal to or greater than the third threshold T3.

After the time point t21, the rotational speed of the front wheel 11b decreases below the third threshold T3; thus, the processing circuitry 40 lowers the second swing threshold Tob to a value less than the value Tob2. After the time point t21, the absolute value of the amount of swing displacement of the swing body 51 increases.

At the time point t22, the rear wheel 11a of the vehicle 1 starts to slip down. Thus, after the time point t22, the absolute value of the amount of swing displacement of the swing body 51 is equal to or greater than the first swing threshold Toa. Furthermore, after the time point t22, the absolute value of the slip ratio sharply increases. Thus, the processing circuitry 40 significantly lowers the second swing threshold Tob. After the time point t22, the second swing threshold Tob is greater than the default value Tob0 until the time point t23. The length of the period during which the absolute value of the amount of swing displacement of the swing body 51 is equal to or greater than the first swing threshold Toa is less than the second swing threshold Tob. Thus, the processing circuitry 40 determines that the vehicle 1 has not rolled over.

The absolute value of the leftward/rightward inertial force sharply increases immediately before the time point t23 and becomes equal to or greater than the first threshold T1 at the time point t23. Thus, at the time point t23, the processing circuitry 40 sets the second swing threshold Tob to the default value Tob0. The length of the period (t23 - t22) from the time point t22 to the time point t23 is equal to or greater than the default value Tob0. Thus, at the time point t23, the processing circuitry 40 determines that the vehicle 1 has rolled over.

As described above, in the case where the vehicle 1 rolls over when moving at a low speed, the processing circuitry 40 corrects the second swing threshold Tob by bringing the second swing threshold Tob closer to the default value Tob0 as the vehicle 1 approaches the rollover state, and cancels the setting in which the second swing threshold Tob is greater than the default value Tob0. This reduces the time lag between when the vehicle 1 actually enters the rollover state and when the processing circuitry 40 determines that the vehicle 1 has rolled over. Thus, the correction of the second swing threshold Tob does not interfere with detection of actual rollover of the vehicle 1.

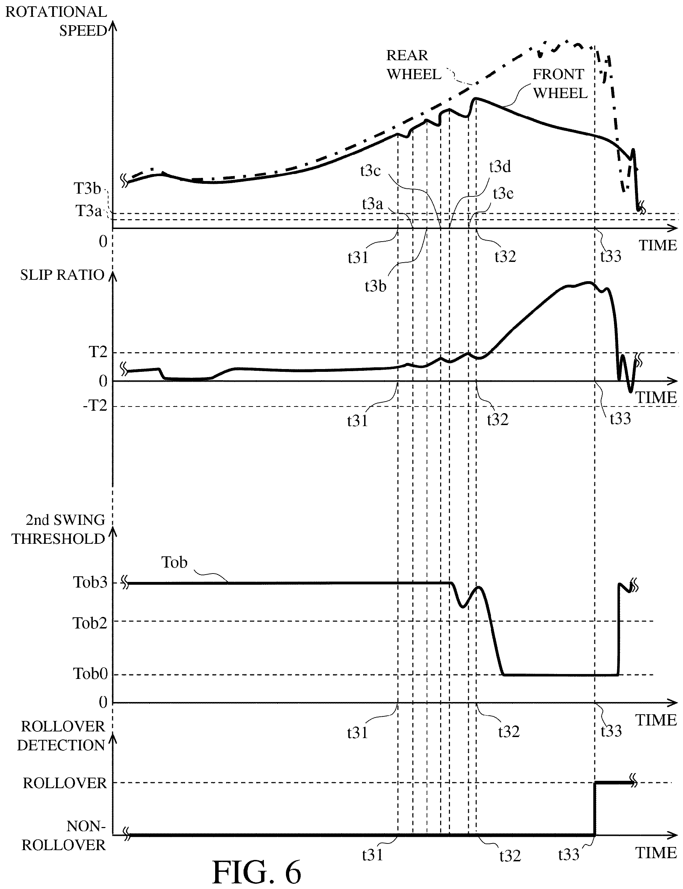

FIG. 6 shows an example of the process performed by the processing circuitry 40 according to the embodiment to correct the second swing threshold Tob in the case where the vehicle 1 rolls over when moving at a high speed. The high speed is preferably 80 km/h or more and more preferably 100 km/h or more. As shown in FIG. 6, at a time point t32, the vehicle 1 enters a state called front-up in which the front wheel 11b is off the road surface. After that, at a time point t33, the vehicle 1 falls into the rollover state in which the vehicle body is in contact with the ground.

Until a time point t31 before the time point t32, the absolute value of the leftward/rightward inertial force is equal to or less than the first threshold T1, the rotational speed of the front wheel 11b is equal to or greater than the third threshold T3, and the absolute value of the slip ratio is equal to or less than the second threshold T2. Thus, the processing circuitry 40 sets and maintains the second swing threshold Tob at a value Tob3 greater than the default value Tob0.

In the present example, the third threshold T3 corresponds to a travel speed of 30 km/h. The sixth threshold T6 corresponds to a travel speed of 20 km/h. The determination value C3 is 1 in a case that the rotational speed of the front wheel 11b is equal to or greater than the third threshold T3, is 0 in a case that the rotational speed of the front wheel 11b is equal to or less than the sixth threshold T6, and is a given value of greater than 0 to less than 1 in a case that the rotational speed of the front wheel 11b is greater than the sixth threshold T6 and less than the third threshold T3. Thus, the value Tob3 of the second swing threshold Tob can be greater than the value Tob2 of FIG. 5.

During the period from the time point t31 to the time point t32, the front wheel 11b of the vehicle 1 enters a mild front-up state at the time point t31 and then lands on the road surface at a time point t3a. The front wheel 11b enters a front-up state again at a time point t3b and then lands on the road surface at a time point t3c. The front wheel 11b enters a mild front-up state again at a time point t3d and then lands on the road surface at a time point t3e. The front wheel 11b of the vehicle 1 enters a front-up state at the time point t32 and remains in the front-up state thereafter. At the time point t33, the vehicle 1 rolls over and the front wheel 11b comes into contact with the ground.

After the time point t32, the absolute value of the slip ratio sharply increases much beyond the second threshold T2; thus, the processing circuitry 40 significantly lowers the second swing threshold Tob and sets it to the default value Tob0. Furthermore, since the length of the period (t33 - t32) from the time point t32 to the time point t33 is equal to or greater than the default value Tob0, the processing circuitry 40 determines at the time point t33 that the vehicle 1 has rolled over.

As described above, in the case where the vehicle 1 rolls over when moving at a high speed, once the vehicle 1 enters a state such as the front-up state that can lead to rollover of the vehicle 1, the processing circuitry 40 sets the second swing threshold Tob to the default value Tob0 and cancels the setting in which the second swing threshold Tob is greater than the default value Tob0. This reduces the time lag between when the vehicle 1 actually enters the rollover state and when the processing circuitry 40 determines that the vehicle 1 has rolled over. Thus, the correction of the second swing threshold Tob does not interfere with detection of actual rollover of the vehicle 1.

### [Variant 1]

Variant 1 of the embodiment will be described. The present variant differs from the embodiment in that the processing circuitry according to the present variant uses not only detection results of the second sensors 60 of the embodiment but also detection results of other second sensors 60 in the determination of whether the vehicle 1 is in a non-rollover state. The following focuses on the features distinguishing the present variant from the embodiment and may omit descriptions of the features of the variant that are common to the embodiment.

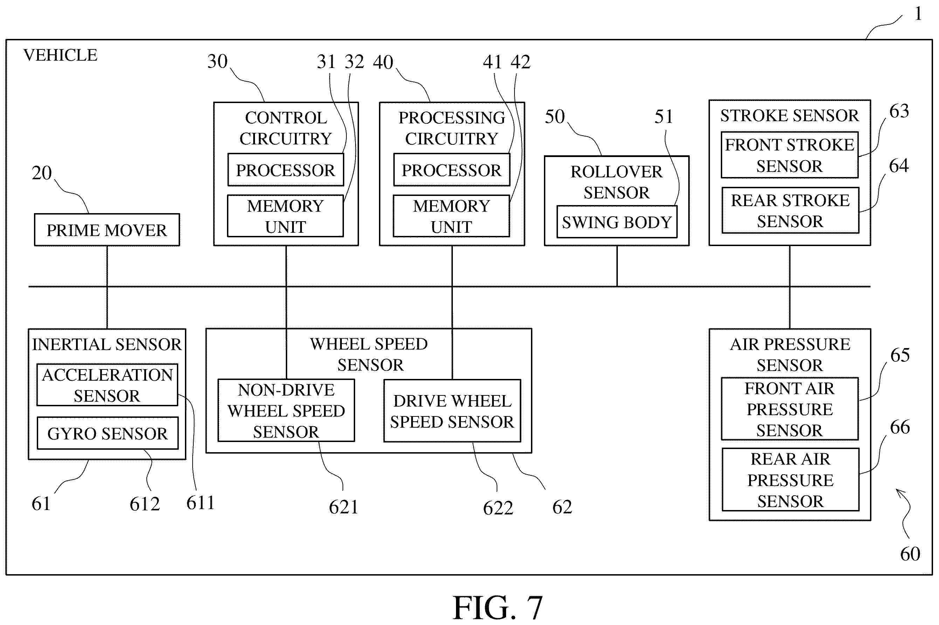

FIG. 7 is a block diagram showing examples of the configurations of the control circuitry 30 and the processing circuitry 40 according to Variant 1. As shown in FIG. 7, the at least one second sensor 60 may include a front stroke sensor 63 or a rear stroke sensor 64 or both. The at least one second sensor 60 may include a front air pressure sensor 65 or a rear air pressure sensor 66 or both. In the present variant, the at least one second sensor 60 includes the front stroke sensor 63, the rear stroke sensor 64, the front air pressure sensor 65, and the rear air pressure sensor 66.

The front stroke sensor 63 detects the amount of stroke by which the front forks 104 serving as a front suspension are extended or contracted. The rear stroke sensor 64 detects the amount of stroke by which the rear suspension 106 is extended or contracted. The stroke sensors 63 and 64 output the detection results as the estimation information to the processing circuitry 40. The stroke sensors 63 and 64 are sensors for travel control. Hereinafter, the "front forks 104" may be referred to as the "front suspension 104".

The front air pressure sensor 65 detects the air pressure of the tire of the front wheel 11b. The rear air pressure sensor 66 detects the air pressure of the tire of the rear wheel 11a. The air pressure sensors 65 and 66 output the detection results as the estimation information to the processing circuitry 40. The air pressure sensors 65 and 66 are sensors for travel control.

Based on a detection result of the front stroke sensor 63 or the rear stroke sensor 64 or detection results of both the front and rear stroke sensors 63 and 64, the processing circuitry 40 estimates the probability that the vehicle 1 has not rolled over.

The processing circuitry 40 may detect an extension-contraction interval between extension and contraction of the suspension 104 or 106 based on a detection result of the stroke sensor 63 or 64 and estimate the probability that the vehicle 1 has not rolled over based on the extension-contraction interval. In a case that the extension-contraction interval is equal to or less than a given interval of time, the processing circuitry 40 can estimate that there is a high probability that the vehicle 1 has not rolled over. In a case that the extension-contraction interval is equal to or less than a seventh threshold T7, the processing circuitry 40 may estimate that there is a high probability that the vehicle 1 has not rolled over. In a case that the state in which the extension-contraction interval is equal to or less than the seventh threshold T7 continues over the estimation period ta, the processing circuitry 40 may estimate that there is a high probability that the vehicle 1 has not rolled over. The case as described above can arise when the vehicle 1 is traveling in a non-rollover state.

The processing circuitry 40 may estimate a determination value C4 based on the extension-contraction interval. The determination value C4 may be a percentage or fraction indicating the probability that the vehicle 1 has not rolled over. In the present variant, the determination value C4 is a positive value indicating that there is a probability that the vehicle 1 has not rolled over. Alternatively, the determination value C4 may be a negative value indicating that there is a probability that the vehicle 1 has rolled over.

The processing circuitry 40 may assign a maximum value such as 100% to the determination value C4 in a case that the extension-contraction interval of the suspension 104 or 106 is equal to or less than the seventh threshold T7. The processing circuitry 40 may assign the maximum value to the determination value C4 in a case that the state in which the extension-contraction interval is equal to or less than the seventh threshold T7 continues over the estimation period ta. The processing circuitry 40 may determine the determination value C4 in such a manner that the determination value C4 decreases with increasing length of the extension-contraction interval. The processing circuitry 40 may correct the determination value C4, for example, based on an integral, a past trend, or a temporal change of the extension-contraction interval or on a combination of two or more of the integral, the past trend, and the temporal change.

The processing circuitry 40 may, based on a detection result of the stroke sensor 63 or 64, detect an extension period during which one or both of the suspensions 104 and 106 remain maximally extended, and estimate the probability that the vehicle 1 has not rolled over based on the extension period. In a case that the extension period is equal to or less than a given period of time, the processing circuitry 40 can estimate that there is a high probability that the vehicle 1 has not rolled over. In a case that the extension period is equal to or less than an eighth threshold T8, the processing circuitry 40 may estimate that there is a high probability that the vehicle 1 has not rolled over. In the present variant, the processing circuitry 40 makes the estimation based on the extension period during which both of the suspensions 104 and 106 remain maximally extended. The case as described above can arise when the vehicle 1 is jumping in a non-rollover state.

The processing circuitry 40 may estimate a determination value C5 based on the extension period. The determination value C5 may be a percentage or fraction indicating the probability that the vehicle 1 has not rolled over. In the present variant, the determination value C5 is a positive value indicating that there is a probability that the vehicle 1 has not rolled over. Alternatively, the determination value C5 may be a negative value indicating that there is a probability that the vehicle 1 has rolled over.

The processing circuitry 40 may assign a maximum value such as 100% to the determination value C5 in a case that the extension period of the suspensions 104 and 106 is equal to or less than the eighth threshold T8. The processing circuitry 40 may determine the determination value C5 in such a manner that the determination value C5 decreases with increasing length of the extension period. The processing circuitry 40 may correct the determination value C5, for example, based on an integral, a past trend, or a temporal change of the extension period or on a combination of two or more of the integral, the past trend, and the temporal change.

The processing circuitry 40 may estimate the probability that the vehicle 1 has not rolled over based on detection results of the air pressure sensors 65 and 66.

The processing circuitry 40 may, based on detection results of the air pressure sensors 65 and 66, detect a variation interval at which one or both of the rear wheel 11a and the front wheel 11b exhibit a variation in tire air pressure, and estimate the probability that the vehicle 1 has not rolled over based on the variation interval. In a case that the variation interval is equal to or less than a given interval of time, the processing circuitry 40 can estimate that there is a high probability that the vehicle 1 has not rolled over. In a case that the variation interval is equal to or less than a ninth threshold T9, the processing circuitry 40 may estimate that there is a high probability that the vehicle 1 has not rolled over. In a case that the state in which the variation interval is equal to or less than the ninth threshold T9 continues over the estimation period ta, the processing circuitry 40 may estimate that there is a high probability that the vehicle 1 has not rolled over. In the present variant, the processing circuitry 40 makes the estimation based on the tire air pressures of both the rear and front wheels 11a and 11b. The case as described above can arise when the vehicle 1 is traveling in a non-rollover state.

The processing circuitry 40 may estimate a determination value C6 based on the variation interval. The determination value C6 may be a percentage or fraction indicating the probability that the vehicle 1 has not rolled over. In the present variant, the determination value C6 is a positive value indicating that there is a probability that the vehicle 1 has not rolled over. Alternatively, the determination value C6 may be a negative value indicating that there is a probability that the vehicle 1 has rolled over.

The processing circuitry 40 may assign a maximum value such as 100% to the determination value C6 in a case that the variation interval of the tire air pressures of the rear and front wheels 11a and 11b is equal to or less than the ninth threshold T9. The processing circuitry 40 may assign the maximum value to the determination value C6 in a case that the state in which the variation interval is equal to or less than the ninth threshold T9 continues over the estimation period ta. The processing circuitry 40 may determine the determination value C6 in such a manner that the determination value C6 decreases with increasing length of the variation interval. The processing circuitry 40 may correct the determination value C6, for example, based on an integral, a past trend, or a temporal change of the variation interval or on a combination of two or more of the integral, the past trend, and the temporal change.

The processing circuitry 40 may, based on detection results of the air pressure sensors 65 and 66, detect a reduced-pressure period from when the air pressures of the tires of both the rear and front wheels 11a and 11b decrease until the air pressures of the tires of both the rear and front wheels 11a and 11b start to increase, and estimate the probability that the vehicle 1 has not rolled over based on the reduced-pressure period. In a case that the reduced-pressure period is equal to or less than a given period of time, the processing circuitry 40 can estimate that there is a high probability that the vehicle 1 has not rolled over. In a case that the reduced-pressure period is equal to or less than a tenth threshold T10, the processing circuitry 40 may estimate that there is a high probability that the vehicle 1 has not rolled over. The case as described above can arise when the vehicle 1 is jumping in a non-rollover state.

The processing circuitry 40 may estimate a determination value C7 based on the reduced-pressure period. The determination value C7 may be a percentage or fraction indicating the probability that the vehicle 1 has not rolled over. In the present variant, the determination value C7 is a positive value indicating that there is a probability that the vehicle 1 has not rolled over. Alternatively, the determination value C7 may be a negative value indicating that there is a probability that the vehicle 1 has rolled over.

The processing circuitry 40 may assign a maximum value such as 100% to the determination value C7 in a case that the reduced-pressure period of the rear and front wheels 11a and 11b is equal to or less than the tenth threshold T10. The processing circuitry 40 may determine the determination value C7 in such a manner that the determination value C7 decreases with increasing length of the reduced-pressure period. The processing circuitry 40 may correct the determination value C7, for example, based on an integral, a past trend, or a temporal change of the reduced-pressure period or on a combination of two or more of the integral, the past trend, and the temporal change.

The processing circuitry 40 corrects the rollover criterion based on one or more estimation parameters related to the extension and contraction of the suspensions of the vehicle 1 and the air pressures of the tires of the vehicle 1 as well as based on the leftward/rightward force acting on the vehicle 1, the travel speed of the vehicle 1, and the slip ratio of the vehicle 1. In the present variant, the determination values Ck for correcting the second swing threshold Tob include the determination values C1 to C7.

In the present variant, the determination values C4 to C7 are used as addends in the equation "Tob = Tob0 × (1 + f(Ck))" expressing the second swing threshold Tob, although this is not limiting. The determination values C4 to C7 may be used as other kinds of arithmetic elements and may be combined with the other determination values by arithmetic operations.

In a case that the extension-contraction interval is equal to or less than the seventh threshold T7, the determination value C4 may be set to a given value such as "1" greater than 0, while in a case that the extension-contraction interval is greater than the seventh threshold T7, the determination value C4 may be set to "0". The determination value C4 may be set in such a manner that the determination value C4 decreases stepwise with increasing length of the extension-contraction interval.

For example, there may be one or more determination values to which the determination value C4 can be set when the extension-contraction interval is greater than the seventh threshold T7. The determination value C4 may be set to "1" when the extension-contraction interval ranges from 0 to the seventh threshold T7, may be set to "0" when the extension-contraction interval is greater than an eleventh threshold T11, and may be set to a given value of greater than 0 to less than 1 when the extension-contraction interval ranges from greater than the seventh threshold T7 to the eleventh threshold T11. The eleventh threshold T11 is greater than the seventh threshold T7. Alternatively or additionally, there may be one or more determination values to which the determination value C4 can be set when the extension-contraction interval ranges from 0 to the seventh threshold T7. The processing circuitry 40 may choose one of different determination values associated respectively with different ranges of the extension-contraction interval as the determination value C4 related to the extension-contraction interval.

In a case that the extension period is equal to or less than the eighth threshold T8, the determination value C5 may be set to a given value such as "1" greater than 0, while in a case that the extension period is greater than the eighth threshold T8, the determination value C5 may be set to "0". The determination value C5 may be set in such a manner that the determination value C5 decreases stepwise with increasing length of the extension period.

For example, there may be one or more determination values to which the determination value C5 can be set when the extension period is greater than the eighth threshold T8. The determination value C5 may be set to "1" when the extension period ranges from 0 to the eighth threshold T8, may be set to "0" when the extension period is greater than a twelfth threshold T12, and may be set to a given value of greater than 0 to less than 1 when the extension period ranges from greater than the eighth threshold T8 to the twelfth threshold T12. The twelfth threshold T12 is greater than the eighth threshold T8. Alternatively or additionally, there may be one or more determination values to which the determination value C5 can be set when the extension period ranges from 0 to the eighth threshold T8. The processing circuitry 40 may choose one of different determination values associated respectively with different ranges of the extension period as the determination value C5 related to the extension period.

**In** a case that the variation interval is equal to or less than the ninth threshold T9, the determination value C6 may be set to a given value such as "1" greater than 0, while in a case that the variation interval is greater than the ninth threshold T9, the determination value C6 may be set to "0". The determination value C6 may be set in such a manner that the determination value C6 decreases stepwise with increasing length of the variation interval.

For example, there may be one or more determination values to which the determination value C6 can be set when the variation interval is greater than the ninth threshold T9. The determination value C6 may be set to "1" when the variation interval ranges from 0 to the ninth threshold T9, may be set to "0" when the variation interval is greater than a thirteenth threshold T13, and may be set to a given value of greater than 0 to less than 1 when the variation interval ranges from greater than the ninth threshold T9 to the thirteenth threshold T13. The thirteenth threshold T13 is greater than the ninth threshold T9. Alternatively or additionally, there may be one or more determination values to which the determination value C6 can be set when the variation interval ranges from 0 to the ninth threshold T9. The processing circuitry 40 may choose one of different determination values associated respectively with different ranges of the variation interval as the determination value C6 related to the variation interval.

In a case that the reduced-pressure period is equal to or less than the tenth threshold T10, the determination value C7 may be set to a given value such as "1" greater than 0, while in a case that the reduced-pressure period is greater than the tenth threshold T10, the determination value C7 may be set to "0". The determination value C7 may be set in such a manner that the determination value C7 decreases stepwise with increasing length of the reduced-pressure period.

For example, there may be one or more determination values to which the determination value C7 can be set when the reduced-pressure period is greater than the tenth threshold T10. The determination value C7 may be set to "1" when the reduced-pressure period ranges from 0 to the tenth threshold T10, may be set to "0" when the reduced-pressure period is greater than a fourteenth threshold T14, and may be set to a given value of greater than 0 to less than 1 when the reduced-pressure period ranges from greater than the tenth threshold T10 to the fourteenth threshold T14. The fourteenth threshold T14 is greater than the tenth threshold T10. Alternatively or additionally, there may be one or more determination values to which the determination value C7 can be set when the reduced-pressure period ranges from 0 to the tenth threshold T10. The processing circuitry 40 may choose one of different determination values associated respectively with different ranges of the reduced-pressure period as the determination value C7 related to the reduced-pressure period.

In the present variant, the function f(Ck) may be defined as f(Ck) = C1 + C2 × C3 + C4 + C5 + C6 + C7, and the second swing threshold Tob may be defined as Tob = Tob0 × (1 + C1 + C2 × C3 + C4 + C5 + C6 + C7). As in the embodiment, the processing circuitry 40 uses the second swing threshold Tob defined as above to determine whether the vehicle 1 is in a non-rollover state. The second swing threshold Tob according to the present variant is corrected using determination values related to more estimation parameters than the second swing threshold Tob is corrected in the embodiment. This can improve the accuracy of determination of whether the vehicle 1 is in a non-rollover state.

### [Variant 2]

Variant 2 of the embodiment will be described. The present variant differs from the embodiment in that, when estimating the probability that the vehicle 1 has not rolled over based on an estimation parameter, the processing circuitry according to the present variant corrects the estimated probability. The following focuses on the features distinguishing the present variant from the embodiment and Variant 1 and may omit descriptions of the features of the variant that are common to the embodiment or Variant 1.

In the present variant, the processing circuitry 40 estimates the probability that the vehicle 1 has not rolled over based on a leftward/rightward force acting on the vehicle 1 and corrects the estimated probability. In this correction, the processing circuitry 40 uses an upward/downward inertial force or a forward/backward inertial force acting on the vehicle 1 or uses both the upward/downward and forward/backward inertial forces. In the present variant, both the upward/downward and forward/backward inertial forces are used.

The processing circuitry 40 estimates the attitude of the vehicle 1 based on a detection result of the inertial sensor 61. The processing circuitry 40 detects the upward/downward and forward/backward inertial forces acting on the vehicle 1 based on the attitude of the vehicle 1 and a detection result of the accelerations along the detection axes of the inertial sensor 61. The upward/downward inertial force acting on the vehicle 1 is an inertial force acting vertically in the upward/downward direction of the vehicle 1. The forward/backward inertial force acting on the vehicle 1 is an inertial force acting horizontally in the forward/backward direction of the vehicle 1.

During travel, the vehicle 1 receives a reaction force from the road surface. For this reason, when the vehicle 1 is traveling, the vertically upward inertial force acting on the vehicle 1 and the vertically downward inertial force acting on the vehicle 1 are not balanced out. Thus, in a case that the upward/downward inertial force acting on the vehicle 1 is not 0, it can be estimated that there is a high probability that the vehicle 1 is moving in a non-rollover state. In a case that the absolute value of the upward/downward inertial force, which is an inertial force acting on the vehicle 1 in the upward/downward direction, is equal to or greater than an upward/downward threshold Tud, the processing circuitry 40 may estimate that there is a high probability that the vehicle 1 has not rolled over. In a case that the state in which the absolute value of the upward/downward inertial force is equal to or greater than the upward/downward threshold Tud continues over the estimation period ta, the processing circuitry 40 may estimate that there is a high probability that the vehicle 1 has not rolled over.

The processing circuitry 40 may estimate a determination value C8 based on the upward/downward inertial force. The determination value C8 may be a percentage or fraction indicating the probability that the vehicle 1 has not rolled over. In the present variant, the determination value C8 is a positive value indicating that there is a probability that the vehicle 1 has not rolled over. Alternatively, the determination value C8 may be a negative value indicating that there is a probability that the vehicle 1 has rolled over.

The processing circuitry 40 may assign a maximum value such as 100% to the determination value C8 in a case that the absolute value of the upward/downward inertial force is equal to or greater than the upward/downward threshold Tud. The processing circuitry 40 may assign the maximum value to the determination value C8 in a case that the state in which the absolute value of the upward/downward inertial force is equal to or greater than the upward/downward threshold Tud continues over the estimation period ta. The processing circuitry 40 may determine the determination value C8 in such a manner that the determination value C8 increases with increasing absolute value of the upward/downward inertial force. The processing circuitry 40 may correct the determination value C8, for example, based on an integral, a past trend, or a temporal change of the upward/downward inertial force or on a combination of two or more of the integral, the past trend, and the temporal change.

When entering or in the rollover state, the vehicle 1 cannot move ahead by drive power of the rear wheel 11a and cannot sufficiently brake the front wheel 11b and the rear wheel 11a. In such a state, the forward/backward inertial force acting on the vehicle 1 can be 0. When moving ahead by drive power of the rear wheel 11a, the vehicle 1 can be subjected to the forward/backward inertial force. Thus, in a case that the forward/backward inertial force acting on the vehicle 1 is not 0, it can be estimated that there is a high probability that the vehicle 1 is moving in a non-rollover state.

In a case that the absolute value of the forward/backward inertial force, which is an inertial force acting on the vehicle 1 in the forward/backward direction, is equal to or greater than a forward/backward threshold Tfb, the processing circuitry 40 may estimate that there is a high probability that the vehicle 1 has not rolled over. In a case that the state in which the absolute value of the forward/backward inertial force is equal to or greater than the forward/backward threshold Tfb continues over the estimation period ta, the processing circuitry 40 may estimate that there is a high probability that the vehicle 1 has not rolled over.

The processing circuitry 40 may estimate a determination value C9 based on the forward/backward inertial force. The determination value C9 may be a percentage or fraction indicating the probability that the vehicle 1 has not rolled over. In the present variant, the determination value C9 is a positive value indicating that there is a probability that the vehicle 1 has not rolled over. Alternatively, the determination value C9 may be a negative value indicating that there is a probability that the vehicle 1 has rolled over.

The processing circuitry 40 may assign a maximum value such as 100% to the determination value C9 in a case that the absolute value of the forward/backward inertial force is equal to or greater than the forward/backward threshold Tfb. The processing circuitry 40 may assign the maximum value to the determination value C9 in a case that the state in which the absolute value of the forward/backward inertial force is equal to or greater than the forward/backward threshold Tfb continues over the estimation period ta. The processing circuitry 40 may determine the determination value C9 in such a manner that the determination value C9 decreases with decreasing absolute value of the forward/backward inertial force. The processing circuitry 40 may correct the determination value C9, for example, based on an integral, a past trend, or a temporal change of the forward/backward inertial force or on a combination of two or more of the integral, the past trend, and the temporal change.

The processing circuitry 40 applies the determination value C8 related to the upward/downward inertial force or the determination value C9 related to the forward/backward inertial force or both of the determination values C8 and C9 to the equation "Tob = Tob0 × (1 + f(Ck))" expressing the second swing threshold Tob. In the present variant, the processing circuitry 40 combines the determination values C8 and C9 with the determination value C1.

The determination value C8 is combined as a multiplier with the determination value C1. Thus, the determination value C1 is corrected by increasing or decreasing it based on the probability that the vehicle 1 has not rolled over which is indicated by the determination value C8. In a case that the absolute value of the upward/downward inertial force is equal to or greater than the upward/downward threshold Tud, the determination value C8 may be set to a given value such as "1" greater than 0, while in a case that the absolute value of the upward/downward inertial force is less than the upward/downward threshold Tud, the determination value C8 may be set to "0". The determination value C8 may be set in such a manner that the determination value C8 increases stepwise with increasing absolute value of the upward/downward inertial force.

For example, there may be one or more determination values to which the determination value C8 can be set when the absolute value of the upward/downward inertial force is less than the upward/downward threshold Tud. The determination value C8 may be set to "0" when the absolute value of the upward/downward inertial force ranges from 0 to a second upward/downward threshold Tuda, may be set to "1" when the absolute value of the upward/downward inertial force is greater than the first upward/downward threshold Tud, and may be set to a given value of greater than 0 to less than 1 when the absolute value of the upward/downward inertial force ranges from greater than the second upward/downward threshold Tuda to the first upward/downward threshold Tud. The second upward/downward threshold Tuda is less than the first upward/downward threshold Tud. Alternatively or additionally, there may be one or more determination values to which the determination value C8 can be set when the absolute value of the upward/downward inertial force is greater than the first upward/downward threshold Tud. The processing circuitry 40 may choose one of different determination values associated respectively with different ranges of the absolute value of the upward/downward inertial force as the determination value C8 related to the upward/downward inertial force.

The determination value C9 is combined as a multiplier with the determination value C1. Thus, the determination value C1 is corrected by increasing or decreasing it based on the probability that the vehicle 1 has not rolled over which is indicated by the determination value C9. In a case that the absolute value of the forward/backward inertial force is equal to or greater than the forward/backward threshold Tfb, the determination value C9 may be set to a given value such as "1" greater than 0, while in a case that the absolute value of the forward/backward inertial force is less than the forward/backward threshold Tfb, the determination value C9 may be set to "0". The determination value C9 may be set in such a manner that the determination value C9 increases stepwise with increasing absolute value of the forward/backward inertial force.

For example, there may be one or more determination values to which the determination value C9 can be set when the absolute value of the forward/backward inertial force is less than the forward/backward threshold Tfb. The determination value C9 may be set to "0" when the absolute value of the forward/backward inertial force ranges from 0 to a second forward/backward threshold Tfba, may be set to "1" when the absolute value of the forward/backward inertial force is greater than the first forward/backward threshold Tfb, and may be set to a given value of greater than 0 to less than 1 when the absolute value of the forward/backward inertial force ranges from greater than the second forward/backward threshold Tfba to the first forward/backward threshold Tfb. The second forward/backward threshold Tfba is less than the first forward/backward threshold Tfb. Alternatively or additionally, there may be one or more determination values to which the determination value C9 can be set when the absolute value of the forward/backward inertial force is greater than the first forward/backward threshold Tfb. The processing circuitry 40 may choose one of different determination values associated respectively with different ranges of the absolute value of the forward/backward inertial force as the determination value C9 related to the forward/backward inertial force.

Assuming that the present variant is based on the embodiment, the function f(Ck) according to the present variant may be defined as f(Ck) = C1 × C8 × C9 + C2 × C3. Assuming that the present variant is based on Variant 1, the function f(Ck) according to the present variant may be defined as f(Ck) = C1 × C8 × C9 + C2 × C3 + C4 + C5 + C6 + C7. Assuming that the present variant is based on the embodiment, the second swing threshold Tob may be defined as Tob = Tob0 × (1 + C1 × C8 × C9 + C2 × C3). Assuming that the present variant is based on Variant 1, the second swing threshold Tob may be defined as Tob = Tob0 × (1 + C1 × C8 × C9 + C2 × C3 + C4 + C5 + C6 + C7). As in the embodiment or Variant 1, the processing circuitry 40 uses the second swing threshold Tob defined as above to determine whether the vehicle 1 is in a non-rollover state. The second swing threshold Tob according to the present variant is corrected using determination values related to more estimation parameters than the second swing threshold Tob is corrected in the embodiment or Variant 1. This can improve the accuracy of determination of whether the vehicle 1 is in a non-rollover state.

### [Other Changes and Modifications]

Although the foregoing has described an exemplary embodiment of the present invention and variants of the embodiment, the present invention is not limited to the embodiment and variants described above. Various changes and modifications can be made without departing from the scope of the present invention. The scope of the present invention includes, for example, embodiments or variants resulting from various changes made to any of the above embodiment and variants or constructed by combining the elements of different embodiments and variants.

For example, although in the above embodiment and variants the processing circuitry 40 corrects the rollover criterion by correcting the second swing threshold Tob related to the swing period during which the swing body 51 of the rollover sensor 50 remains swung, the correction of the rollover criterion is not limited to this way of correction. The processing circuitry 40 may correct the rollover criterion by correcting the first swing threshold Toa related to the amount of swing displacement of the swing body 51 of the rollover sensor 50. In this case, the first swing threshold Toa may be defined by an equation similar to that expressing the second swing threshold Tob. For example, the first swing threshold Toa may be defined by the equation Toa = Toa0 × (1 + g(Ck)) wherein Toa0 is a default value of the first swing threshold and Ck is a determination value related to an estimation parameter. The function g(Ck) is a function including determination values C1 to Cn as elements. The function g(Ck) and the determination values Ck may be defined similarly to the function f(Ck) and determination values Ck for correcting the second swing threshold Tob.

In a case that the determination values Ck are greater than 0, the first swing threshold Toa can be corrected with the determination values Ck to be greater than the default value Toa0. Thus, in a case that there is a probability that the vehicle 1 has not rolled over, the rollover criterion can be corrected by increasing the first swing threshold Toa to a value greater than the default value Toa0 so that the rollover criterion is less likely to be satisfied.

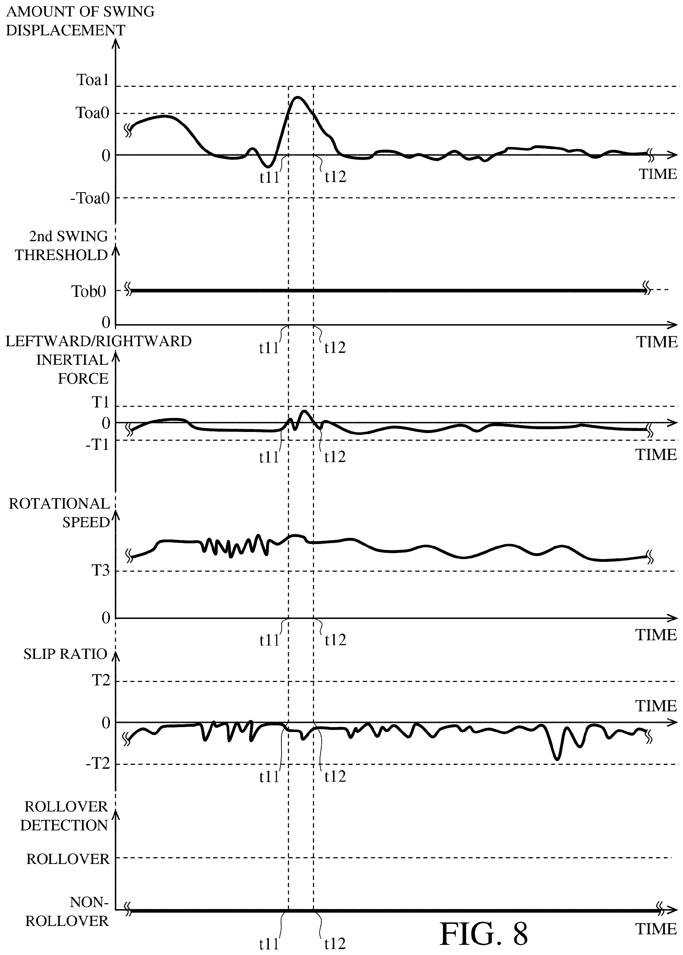

FIG. 8, like FIG. 4, shows an example of the process performed by the processing circuitry 40 to correct the first swing threshold Toa. As shown in FIG. 8, the first swing threshold Toa is shown in the graph depicting the amount of swing displacement. The behaviors of the amount of swing displacement, the leftward/rightward inertial force, the rotational speed, and the slip ratio in FIG. 8 are the same as those in FIG. 4. Thus, before the time point t11, the processing circuitry 40 corrects the first swing threshold Toa to a value Toa1 greater than the default value Toa0 and maintains the first swing threshold Toa at the value Toa1. In the period (t12 - t11), the swing body 51 keeps the absolute value of the amount of swing displacement equal to or greater than the default value Toa0 and less than the corrected first swing threshold Toa1 over a period of time equal to or greater than the second swing threshold Tob. Thus, the processing circuitry 40 determines that the vehicle 1 has not rolled over.

Although in the above embodiment and variants the processing circuitry 40 corrects the second swing threshold Tob to a value greater than the default value Tob0 based on detection results of the second sensors 60, the correction of the second swing threshold Tob is not limited to this way of correction. For example, when it can be estimated based on detection results of the second sensors 60 that there is a high probability that the vehicle 1 has rolled over, the processing circuitry 40 may correct the second swing threshold Tob to a value less than the default value Tob0. Alternatively, the processing circuitry 40 may correct the first swing threshold Toa to a value less than the default value. In this case, the determination values Ck may be negative values. Each determination value Ck may be a subtrahend or minuend, a multiplier or multiplicand, or a divisor or dividend for the default value of the swing threshold.

In the above embodiment and variants, the processing circuitry 40 uses various thresholds to determine the determination values Ck for correcting the swing threshold. The various thresholds may be constants or variables. For example, in a case that the amount of change per unit time in an estimation parameter or the amount of change per unit time in the behavior of the vehicle 1 is greater than a given amount, it can be estimated that there is a high probability that the vehicle 1 has rolled over. In a case that the amount of change is greater than a given amount, the processing circuitry 40 may vary the thresholds such that the probability that the vehicle 1 has not rolled over is estimated to be low, namely such that the vehicle 1 is less likely to be determined to be in a non-rollover state. The processing circuitry 40 may detect the behavior of the vehicle 1 based on a detection result of the inertial sensor 61.

Although in the above embodiment and variants, when correcting the swing threshold, the processing circuitry 40 combines the determination values with the default value such that the swing threshold is increased from the default value by a certain percentage depending on the determination values, the combining of the determination values with the default value is not limited to this way of combining. For example, the processing circuitry 40 may combine the determination values with the default value such that the swing threshold is reduced from the default value by a certain percentage depending on the determination values, that the swing threshold is a sum obtained by adding the determination values to the default value, or that the swing threshold is a difference obtained by subtracting the determination values from the default value. The way of combining the determination values with the default value may be chosen in accordance with the properties of the estimation parameters in relation to which the determination values are determined.

Although in the above embodiment and variants the processing circuitry 40 corrects the rollover criterion by correcting the swing threshold such as the second swing threshold Tob based on the slip ratio, the correction of the swing threshold is not limited to this way of correction. For example, in the correction of the swing threshold, the processing circuitry 40 may use the wheel speed difference instead of or in addition to the slip ratio. In a case that the wheel speed difference is small, the processing circuitry 40 may estimate that there is a high probability that the vehicle 1 has not rolled over, and the estimated probability may increase as the wheel speed difference decreases. In the correction of the swing threshold, the processing circuitry 40 may determine and use a determination value related to the wheel speed difference. In a case that the absolute value of the wheel speed difference is 0 or equal to or less than a threshold close to 0, the processing circuitry 40 may set the determination value to a given value such as "1" greater than 0, while in a case that the absolute value of the wheel speed difference is greater than 0 or the threshold, the processing circuitry 40 may set the determination value to "0". The processing circuitry 40 may determine the determination value in such a manner that the determination value decreases stepwise with increasing absolute value of the wheel speed difference from 0.

Although in the above embodiment and variants the processing circuitry 40 corrects the rollover criterion by correcting the swing threshold such as the second swing threshold Tob based on the leftward/rightward inertial force acting on the vehicle 1, the correction of the swing threshold is not limited to this way of correction. For example, in the correction of the swing threshold, the processing circuitry 40 may use one or more of the attitude, acceleration, and angular velocity of the vehicle 1 instead of or in addition to the inertial force. The processing circuitry 40 may detect the attitude, acceleration, and angular velocity of the vehicle 1 based on a detection result of the inertial sensor 61. In the correction of the swing threshold, the processing circuitry 40 may determine and use determination values related to one or more of the attitude, acceleration, and angular velocity of the vehicle 1.

For example, a deviation of the attitude of the vehicle 1 from the vertical upright attitude or a state of the attitude of the vehicle 1 may be detected. Examples of the state of the attitude of the vehicle 1 may include: a stoppie state in which only the front wheel 11b is in contact with the ground; a wheelie state in which only the rear wheel 11a is in contact with the ground; and a normal state in which both the front wheel 11b and the rear wheel 11a are in contact with the ground. The deviation is correlated with whether the vehicle 1 has rolled over. When the vehicle 1 is in the stoppie or wheelie state, this means that the vehicle 1 has not rolled over even though the amount of tilt of the vehicle body of the vehicle 1 might be large. Thus, determination values can be set in association with the deviation and the state of the attitude. The vehicle 1's acceleration to be detected may be a horizontal acceleration of the vehicle 1 in the leftward/rightward direction of the vehicle 1. Such an acceleration is correlated with the leftward/rightward inertial force acting on the vehicle 1. Thus, a determination value can be set in association with this acceleration. The vehicle 1's angular velocity to be detected may be an angular velocity about a horizontal axis extending in the forward/backward direction of the vehicle 1. Such an angular velocity is correlated with the rotational speed in the rolling direction in which the vehicle body of the vehicle 1 can roll over. Thus, a determination value can be set in association with this angular velocity.

The processing circuitry 40 according to any one of the above embodiment and variants may detect a particular travel state of the vehicle 1 based on detection results of the second sensors 60. The processing circuitry 40 may use a determination value related to the particular travel state of the vehicle 1 to correct the swing threshold. The processing circuitry 40 may determine the determination value based on whether the vehicle 1 is in the particular travel state. In a case that the vehicle 1 is in the particular travel state, the processing circuitry 40 may increase the swing threshold so that the vehicle 1 is less likely to be determined to have rolled over.

Examples of the particular travel state of the vehicle 1 include a steady-state circular turn state and a U-turn state. The processing circuitry 40 may determine that the vehicle 1 is in the steady-state circular turn state or the U-turn state upon determining that the direction of a resultant force of the leftward/rightward and upward/downward inertial forces acting on the vehicle 1 is along a centerline of the vehicle 1. The centerline is a line which is drawn with respect to the vehicle 1 and which extends in the vertical direction when the vehicle 1 is in a vertical upright attitude. A U-turn may include a steady-state circular turn. During a steady-state circular turn or U-turn, it is conceivable that the leftward/rightward inertial force acting on the vehicle 1 exceeds the first threshold T1, the slip ratio exceeds the second threshold T2, and the travel speed falls below the third threshold T3; however, the use of a determination value related to the steady-state circular turn state or the U-turn state can make it less likely that the vehicle 1 is determined to have rolled over.

Although in the above embodiment and variants the processing circuitry 40 corrects the swing threshold in the rollover criterion using detection results of two or more second sensors 60, the correction of the swing threshold is not limited to this way of correction. The processing circuitry 40 may correct the swing threshold using a detection result of one second sensor 60. For example, the processing circuitry 40 may correct the swing threshold using only a detection result of the inertial sensor 61. In this case, the swing threshold can be corrected based on the determination value C1 related to the leftward/rightward force acting on the vehicle 1. For example, the processing circuitry 40 may correct the swing threshold using only a detection result of the wheel speed sensor 62. In this case, the swing threshold can be corrected based on the determination value C2 related to the slip ratio or based on the determination value C2 related to the slip ratio and the determination value C3 related to the travel speed.

In either case, when there is a high probability that the vehicle 1 has not rolled over, the processing circuitry 40 can correct the rollover criterion such that the vehicle 1 is less likely to be determined to have rolled over. The processing circuitry 40 may correct the swing threshold using only detection results of the stroke sensors 63 and 64 or the air pressure sensors 65 and 66. The processing circuitry 40 may correct the swing threshold using one or more of the determination values C1 to C9.

Although in the above embodiment and variants the processing circuitry 40 is configured to, at a time when the determination period tb elapses, determine whether to correct the second swing threshold Tob in the rollover criterion, correct the second swing threshold Tob, and determine whether the vehicle 1 has rolled over based on a comparison of the second swing threshold Tob and the elapsed time, the processing circuitry 40 is not limited to this configuration. The time when the processing circuitry 40 determines whether to correct the second swing threshold Tob and the time when the processing circuitry 40 corrects the second swing threshold Tob may be different from the time when the processing circuitry 40 determines whether the vehicle 1 has rolled over.

Although in the above embodiment and variants the processing circuitry 40 determines whether to correct the second swing threshold Tob and corrects the second swing threshold Tob every correction period tc regardless of whether the amount of swing displacement detected by the rollover sensor 50 is equal to or greater than the first swing threshold Toa, the processing circuitry 40 is not limited to this way of determination and correction. For example, the processing circuitry 40 may start to time the correction period tc in association with the amount of swing displacement detected by the rollover sensor 50 and may determine whether to correct the second swing threshold Tob and correct the second swing threshold Tob every time the correction period tc elapses. For example, the processing circuitry 40 may start to time the correction period tc once the amount of swing displacement reaches a given percentage of the first swing threshold Toa. The given percentage may be selected from the range of greater than 0 to 100%.

Although in the embodiment and variants, at a time when a correction period tc elapses, the processing circuitry 40 performs the process of determining whether to correct the second swing threshold Tob and correcting the second swing threshold Tob by means of detection results obtained from the second sensors 60 during the last correction period tc, the processing circuitry 40 is not limited to this way of performing the process of determination and correction. In the process, the processing circuitry 40 may use detection results obtained from the second sensors 60 during any period. For example, in the process, the processing circuitry 40 may use detection results obtained from the second sensors 60 during the last correction period tc and one or more correction periods tc prior to the last correction period tc or detection results obtained from the second sensors 60 during the one or more correction periods tc prior to the last correction period tc. The processing circuitry 40 may vary the period during which the processing circuitry 40 obtains detection results from the second sensors 60 in accordance with the types of the estimation parameters detected by the second sensors 60.

In the above embodiment and variants, the control circuitry 30 controls the prime mover 20 to output suitable drive power in accordance with the vehicle 1's travel speed determined based on a detection result of the non-drive wheel speed sensor 621. The control circuitry 30 is not limited to this functionality. For example, the control circuitry 30 may control the behavior of the vehicle 1 by controlling the output of the prime mover 20 based on a detection result of the inertial sensor 61. The control circuitry 30 may control the behavior of the vehicle 1 by controlling an actuator other than the prime mover 20. For example, one or both of the front and rear suspensions 104 and 106 may be controlled by an actuator in terms of, for example, the damping force and the amount of stroke in extension and contraction. The control circuitry 30 may control the behavior of the vehicle 1 by controlling the operation of the actuator for the suspensions 104 and 106 based on detection results of the stroke sensors 63 and 64.

The control circuitry 30 may, based on detection results of the inertial sensor 61 and the wheel speed sensor 62, control the output of the prime mover 20 and a brake actuator that actuates the brakes of the vehicle 1. The control circuitry 30 may control the output of the prime mover 20 in conjunction with the amount of actuation of the brakes. For example, when the vehicle 1 makes a turn or moves in a wheelie state, the control circuitry 30 may, based on detection results of the inertial sensor 61 and the wheel speed sensor 62, assist the operator's action to accelerate the prime mover 20 and the operator's action to activate the brakes.

Although in the above embodiment and variants the vehicle 1 includes the drive wheel speed sensor 622 that detects the rotational speed of the rear wheel 11a of the vehicle 1, the drive wheel speed sensor 622 may be configured to detect the rotational speed of the prime mover 20 that drives the rear wheel 11a. In this case, the drive wheel speed sensor 622 may be a sensor similar to that illustrated above for the wheel speed sensor 62. The functionality of the drive wheel speed sensor 622 may be implemented by the control circuitry 30. The control circuitry 30 may estimate the rotational speed of the prime mover 20 based on a command value for controlling the prime mover 20.

Although in the above embodiment and variants a motorcycle is illustrated as the vehicle 1, the vehicle 1 is not limited to such a motorcycle. The processing circuitry 40, its functionality, and the rollover detection method according to the present invention are applicable to various types of vehicles other than motorcycles. The vehicle 1 may be any vehicle that accommodates one or more persons and could roll over. Examples of the vehicle 1 may include a wheeled vehicle, a watercraft, and various other mobility devices. Examples of the wheeled vehicle may include a motorcycle, a moped, a power-assisted bicycle, and an automobile. The wheeled vehicle may include two or more wheels. Examples of the automobile may include a passenger automobile, a cargo automobile, a bus, an all-terrain vehicle, and a utility vehicle. The all-terrain vehicle may be a vehicle with off-road capability. Examples of the watercraft may include a cargo ship, a passenger ship, a work ship, a fishing ship, a pleasure boat, and a personal watercraft. The watercraft may include one or more propulsion components.

The vehicle 1 may be a lean vehicle that tilts while turning or may be a vehicle that does not tilt while turning. The lean vehicle may be a straddle vehicle. Examples of the straddle vehicle may include a motorcycle, a moped, a power-assisted bicycle, and a personal watercraft. When the vehicle 1 is a lean vehicle, the rollover state of the vehicle 1 may be a state in which the vehicle 1 has a side surface in contact with a ground surface or a water surface and cannot move on the ground surface or the water surface. When the vehicle 1 is not a lean vehicle, the rollover state of the vehicle 1 may be a state in which the vehicle 1 has a side surface in contact with a ground surface or a water surface and further has an upper surface, a front surface, or a rear surface in contact with the ground surface or the water surface. Examples of the rollover state of the vehicle 1 that is not a lean vehicle may include a state in which the vehicle 1 has turned on its side and a state in which the vehicle 1 has turned upside down. Examples of the rollover state of the vehicle 1 may include: a state in which a drive wheel of the vehicle 1 embodied as a wheeled vehicle is off the ground due to a change in the attitude of the vehicle 1; and a state in which a propulsion component such as a propeller or an impeller of the vehicle 1 embodied as a watercraft is exposed on the water surface due to a change in the attitude of the vehicle 1.

Although in the above embodiment and variants the vehicle 1 includes an internal combustion engine as the prime mover 20, the prime mover 20 is not limited to such an internal combustion engine. Examples of the prime mover 20 may include a fluid machine that converts the energy of a fluid to mechanical energy, a thermal engine that converts thermal energy to mechanical energy, and an electric motor that converts electrical energy to mechanical energy. The vehicle 1 may include one prime mover 20 or two or more prime movers 20. For example, the two or more prime movers 20 may drive the same part of the vehicle 1 or may respectively drive two or more different parts of the vehicle 1. For example, each of the prime movers 20 may drive a corresponding one of the wheels 11 included in the drive structure 10. One of the two or more prime movers 20 may drive another of the prime movers 20. For example, one prime mover 20 embodied as an internal combustion engine may transmit rotational power to the drive structure 10 or another prime mover 20 embodied as a rotating electric machine or to both the drive structure 10 and the other prime mover 20. The internal combustion engine may drive the rotating electric machine and cause the rotating electric machine to generate electrical energy.

The structure of the internal combustion engine serving as the prime mover 20 may be any existing structure. The internal combustion engine runs by being supplied with a fuel. The fuel used in the internal combustion engine may be any kind of fuel. Examples of the fuel include: hydrocarbon compound-containing fuels such as gasoline, ethanol, propane gas, and methane; animal/plant-derived fuels such as biofuel; and non-carbide fuels such as hydrogen.

For example, the cylinder structure of the internal combustion engine may be a single cylinder structure or a multi-cylinder structure. The internal combustion engine may be a four-stroke engine or a two-stroke engine.

The structure of the rotating electric machine serving as the prime mover 20 may be any existing structure. For example, the rotating electric machine may have an inner rotor structure that includes a stator and a rotor rotatable together with a drive shaft and in which the rotor is located inside the stator, or may have an outer rotor structure in which the rotor is located outside the stator. The rotating electric machine may rotate the rotor by receiving electric power and generate electric power by the rotor forcibly rotated via the drive shaft. The rotating electric machine may transmit the rotational power of the drive shaft to the drive wheel of the drive structure 10. The rotating electric machine may generate electric power by the drive shaft's rotation induced by the drive structure 10 or the internal combustion engine operating during movement of the vehicle 1 or by both the drive structure 10 and the internal combustion engine, and supply the generated electric power to a battery mounted on the vehicle 1.

The vehicle 1 may be a vehicle including only an internal combustion engine as a prime mover 20, an EV (Electric Vehicle) including only a rotating electric machine as a prime mover 20, or a hybrid vehicle including an internal combustion engine and a rotating electric machine as prime movers 20.

Various aspects of the technology of the present invention are as described below. The expressions "in a case that A" and "when A" as used in the specification and the claims may include the meaning "in response to the fact that A" and be interchangeable with the expression "in response to the fact that A".

A rollover detection method according to a first aspect of the present invention includes: obtaining a detection result from a first sensor that detects an amount of swing displacement of a swing body that swings in response to a change in an attitude of a vehicle; obtaining a detection result from at least one second sensor that detects estimation information for estimating a state of the vehicle independently of the first sensor; determining that the vehicle has rolled over upon determining that the amount of swing displacement of the swing body satisfies a predetermined rollover criterion based on the detection result of the first sensor; and correcting the rollover criterion based on the detection result of the second sensor.

In the first aspect, the rollover criterion is corrected in accordance with the estimated state of the vehicle. By thus correcting the criterion for determining whether the vehicle has rolled over in accordance with the state of the vehicle, it becomes possible to properly determine whether the vehicle has rolled over in a situation where an error could otherwise occur in the determination. Thus, the accuracy of the determination of whether rollover has occurred can be improved. Part or all of the rollover detection method of the present invention may be implemented, for example, by a CPU, circuitry such as an LSI, an IC card, or a single module. The different elements included in the rollover detection method of the present invention may be implemented by a single device or shared between two or more devices.

In the rollover detection method according to a second aspect of the present invention which is based on the first aspect, the at least one second sensor may include a sensor used to control a behavior of the vehicle while the vehicle is moving.

In the second aspect, since a detection result of the sensor for controlling the behavior of the moving vehicle is used in the determination of whether the vehicle has rolled over, the cost required for the determination can be lower than in the case of using a dedicated sensor for improving the accuracy of the determination.

**In** the rollover detection method according to a third aspect of the present invention which is based on the first or second aspect, the at least one second sensor may include a sensor used to estimate that the vehicle is in an upright state while the vehicle is moving.

**In** the third aspect, the determination that the moving vehicle is in an upright state can contribute to preventing erroneous rollover detection attributed to the detection result of the first sensor. For example, the rollover detection method may be such that the moving vehicle is less likely to be determined to have rolled over in a case that the vehicle is determined to be upright than in a case that the vehicle is determined not to be upright.

The rollover detection method according to a fourth aspect of the present invention which is based on any one of the first to third aspects may further include, based on the detection result of the at least one second sensor, estimating whether the vehicle is kept moving by rotation of a drive wheel that is rotated by transmitted drive power to move the vehicle, and the correcting of the rollover criterion may include, upon estimating that the vehicle is kept moving by rotation of the drive wheel, correcting the rollover criterion such that the vehicle is less likely to be determined to have rolled over than in a case that the vehicle is not kept moving by rotation of the drive wheel.

In the fourth aspect, when the vehicle is kept moving, it becomes less likely that the vehicle is determined to be in a rollover state based on the detection result of the first sensor. This can prevent the vehicle from being erroneously determined to be in a rollover state when the vehicle is kept moving.

In the rollover detection method according to a fifth aspect of the present invention which is based on any one of the first to fourth aspects, the vehicle may be a lean vehicle that tilts while turning, the at least one second sensor may include an inertial sensor that detects a force applied to the vehicle or the attitude of the vehicle, and the rollover detection method may include correcting the rollover criterion based on a detection result of the inertial sensor.

In the fifth aspect, the detection of the force applied to the vehicle or the attitude of the vehicle allows for estimation of whether the vehicle is kept moving, and the rollover criterion is corrected based on the estimation result. The estimation that the vehicle is kept moving can be made taking into account a situation where the vehicle is moving in an upright state or where the vehicle is turning, and this can prevent the moving vehicle from being erroneously determined to have rolled over. For example, when the vehicle is moving straight on a rough road or making a turn, the vehicle can be prevented from being erroneously determined to have rolled over due to the first sensor detecting a large amount of swing displacement of the swing body.

For example, when the vehicle is moving straight, the vehicle is in an upright state and not subjected to any leftward/rightward force. For example, when the vehicle is making a steady-state turn, a centrifugally-induced leftward/rightward force and a gravity-induced leftward/rightward force accompanying the tilting of the vehicle are balanced out. By virtue of the determination of whether the vehicle has rolled over being based on the force applied to the vehicle, it becomes possible to prevent erroneous rollover detection attributed to the detection result of the first sensor when the vehicle is moving straight or making a steady-state turn.
Thus, the accuracy of the determination of whether the vehicle has rolled over can be improved.

In the rollover detection method according to a sixth aspect of the present invention which is based on any one of the first to fifth aspects, the at least one second sensor may include a wheel speed sensor that detects a rotational speed of a non-drive wheel of the vehicle or a rotational speed difference between a drive wheel of the vehicle and the non-drive wheel, and the rollover detection method may include correcting the rollover criterion based on a detection result of the wheel speed sensor.

In the sixth aspect, the detection of the rotational speed of the non-drive wheel or the rotational speed difference between the drive wheel and the non-drive wheel allows for estimation of whether the vehicle is kept moving, and the rollover criterion is corrected based on the estimation result. The estimation that the vehicle is kept moving can be made taking into account the rotations of the non-drive and drive wheels which accompany the movement of the vehicle, and this can prevent the moving vehicle from being erroneously determined to have rolled over. For example, when the vehicle is moving straight on a rough road or making a turn, the vehicle can be prevented from being erroneously determined to have rolled over due to the first sensor detecting a large amount of swing displacement of the swing body.

The rollover detection method according to a seventh aspect of the present invention which is based on any one of the first to sixth aspects may further include, based on the detection result of the at least one second sensor, determining whether a moving speed of the vehicle is less than a preset speed, and the correcting of the rollover criterion may include, upon determining that the moving speed of the vehicle is less than the preset speed, correcting the rollover criterion such that the vehicle is more likely to be determined to have rolled over than in a case that the moving speed of the vehicle is equal to or higher than the preset speed.

In the seventh aspect, in a case that the moving speed of the vehicle is less than the preset speed, such as when the vehicle is not moving or moving slowly, it is more likely that the vehicle is determined to be in a rollover state based on the detection result of the first sensor than in other cases. This can prevent delayed detection of the rollover state when the vehicle is not moving or moving slowly.

The rollover detection method according to an eighth aspect of the present invention which is based on any one of the first to seventh aspects may further include: determining whether the detection result of the second sensor has an abnormal value outside a predetermined normal range; and upon determining that the detection result of the second sensor has the abnormal value, canceling a correction made to the rollover criterion based on the detection result of the second sensor.

In the eighth aspect, a correction made to the rollover criterion in an undesired situation such as in the event of abnormality of the second sensor can be canceled, and this can prevent a decline in determination accuracy due to the use of the second sensor.

The rollover detection method according to a ninth aspect of the present invention which is based on any one of the first to eighth aspects may include correcting the rollover criterion based on detection results of a plurality of the second sensors.

In the ninth aspect, the use of the detection results of the plurality of second sensors can improve the accuracy of the correction of the rollover criterion. This can lead to improved accuracy of the determination of whether rollover has occurred.

In the rollover detection method according to a tenth aspect of the present invention which is based on any one of the first to ninth aspects, the rollover criterion may be corrected based on the detection result of the second sensor in a case that the detection result of the second sensor remains corresponding to a predetermined vehicle state for a predetermined period of time.

In the tenth aspect, in a case that the detection result corresponding to the predetermined vehicle state is obtained from the second sensor over the predetermined period of time, the rollover criterion is corrected based on such a detection result. Since the rollover criterion is not changed in response to instantaneous changes in the state of the vehicle, stable determination of whether the vehicle has rolled over can be accomplished.

In the rollover detection method according to an eleventh aspect of the present invention which is based on any one of the first to tenth aspects, the second sensor may include a wheel speed sensor that detects a rotational speed of a drive wheel of the vehicle and a rotational speed of a non-drive wheel of the vehicle, the drive wheel may be a wheel to which drive power generated by a prime mover of the vehicle is transmitted, the non-drive wheel may be a wheel to which the drive power is not transmitted, and the rollover detection method may include correcting the rollover criterion such that the greater is a slip ratio that is a ratio of a difference between the rotational speed of the non-drive wheel and the rotational speed of the drive wheel to the rotational speed of the drive wheel, the less likely the corrected rollover criterion is to be satisfied.

In the eleventh aspect, the slip ratio can indicate a behavioral difference existing between the drive wheel and the non-drive wheel and reflecting the influence of the rotational speed of the drive wheel. For example, in a case that the rotational speed of the drive wheel is high, the slip ratio can be small even if there is a large difference between the rotational speed of the drive wheel and the rotational speed of the non-drive wheel, and in this case there is a probability that the vehicle has rolled over. Thus, the correction based on the slip ratio can improve the accuracy of the determination of whether the vehicle has rolled over.

In the rollover detection method according to a twelfth aspect of the present invention which is based on the eleventh aspect, the second sensor may include a speed sensor that detects a speed of the vehicle, and the rollover detection method may include canceling a correction made to the rollover criterion based on the slip ratio in a case that the speed of the vehicle falls below a threshold speed.

In the twelfth aspect, the vehicle can travel at a speed lower than the threshold speed without rolling over even if the slip ratio is large. For example, when the vehicle makes a steady-state circular turn, the vehicle can keep moving at a speed lower than the threshold speed although the slip ratio increases. Thus, the cancellation of the correction can improve the accuracy of the determination of whether the vehicle has rolled over.

In the rollover detection method according to a thirteenth aspect of the present invention which is based on any one of the first to twelfth aspects, the rollover criterion may be that an amount of tilt of the vehicle from an upright state of the vehicle, as determined based on the detection result of the first sensor, remains equal to or greater than a tilt threshold for a period of time equal to or longer than a threshold period of time, and the rollover detection method may include correcting the rollover criterion by lengthening or shortening the threshold period of time in accordance with the detection result of the second sensor such that the rollover criterion becomes less likely or more likely to be satisfied than before the rollover criterion is corrected.

In the thirteenth aspect, the correction of the rollover criterion and the determination of whether the rollover criterion is satisfied are simplified.

The rollover detection method according to a fourteenth aspect of the present invention which is based on any one of the first to thirteenth aspects may include: using a preset basic criterion as the rollover criterion in a case that a state of the vehicle as detected by the second sensor satisfies a given condition; and using a corrected criterion as the rollover criterion in a case that the state of the vehicle as detected by the second sensor does not satisfy the given condition, the corrected criterion being a criterion that is defined by correcting the basic criterion in accordance with the detection result of the second sensor and that is less likely or more likely to be satisfied than the basic criterion.

In the fourteenth aspect, the rollover criterion is corrected by correcting the preset basic criterion in accordance with the detection result of the second sensor. Thus, the correction of the rollover criterion is simplified. For example, the basic criterion may include a default value of a swing threshold.

A vehicle according to a fifteenth aspect of the present invention includes: a prime mover; a drive structure to which drive power generated by the prime mover is transmitted and that is actuated by the drive power to move the vehicle; a first sensor that detects an attitude of the vehicle; at least one second sensor that detects a parameter of the vehicle, the parameter being different from the attitude detected by the first sensor; and control circuitry that controls the prime mover, wherein the control circuitry stops the prime mover upon determining that the vehicle has rolled over based on detection results of both the first sensor and the second sensor.

In the fifteenth aspect, the control circuitry uses at least two different sensors that detect different parameters to determine whether the vehicle has rolled over. Thus, unlike the case where only a detection result of a single sensor is used to determine whether rollover has occurred, the result of the determination made based on a detection result of one sensor as to whether rollover has occurred can be refined with a detection result of another sensor. This can improve the accuracy of the determination of whether the vehicle has rolled over.

Processing circuitry according to a sixteenth aspect of the present invention is configured to: obtain a detection result of a first sensor that detects an amount of swing displacement of a swing body that swings in response to a change in an attitude of a vehicle; obtain a detection result of at least one second sensor that detects estimation information for estimating a state of the vehicle independently of the first sensor; determine whether the amount of swing displacement of the swing body satisfies a predetermined rollover criterion based on the detection result of the first sensor; determine that the vehicle has rolled over upon determining that the amount of swing displacement of the swing body satisfies the rollover criterion; and correct the rollover criterion based on the detection result of the second sensor.

In the sixteenth aspect, the processing circuitry can provide the same benefits as the rollover detection method according to the preceding aspects of the present invention.

The present invention is applicable to a computer program that causes a computer to implement the rollover detection method according to the preceding aspects of the present invention. For example, a computer program according to a seventeenth aspect of the present invention causes a computer to: obtain a detection result of a first sensor that detects an amount of swing displacement of a swing body that swings in response to a change in an attitude of a vehicle; obtain a detection result of at least one second sensor that detects estimation information for estimating a state of the vehicle independently of the first sensor; determine whether the amount of swing displacement of the swing body satisfies a predetermined rollover criterion based on the detection result of the first sensor; determine that the vehicle has rolled over upon determining that the amount of swing displacement of the swing body satisfies the rollover criterion; and correct the rollover criterion based on the detection result of the second sensor.

Such a computer program can provide the same benefits as the rollover detection method according to the preceding aspects of the present invention. For example, the computer program may be a program stored in a non-transitory, tangible computer-readable storage medium or may be configured to be retrieved from a storage medium by means of a drive device of the storage medium and installed into a computer. For example, the computer program may be a program that can be distributed through a transmission medium such as the Internet or may be configured to be downloaded and installed into a computer.

The functionality of the elements disclosed herein may be implemented using one or more circuitry or processing circuitry which includes general purpose processors, special purpose processors, integrated circuits, ASICs ("Application Specific Integrated Circuits"), FPGAs ("Field Programmable Gate Arrays") and/or conventional circuitry. The functionality of the elements disclosed herein may be implemented using one or more circuitry or processing circuitry which includes combinations of general purpose processors, special purpose processors, integrated circuits, ASICs, FPGAs, or conventional circuitry. The one or more circuitry or processing circuitry is programmed, using one or more programs stored together or individually in one or more memories, or otherwise configured to perform the disclosed functionality. Processors are considered processing circuitry or circuitry as they include transistors and other circuitry therein. The processor may be a programmed processor which executes a program stored in a memory. In the disclosure, the circuitry, units, or means are hardware that carry out or are programmed to perform the recited functionality, alone or in combination with one another. The hardware may be any hardware disclosed herein which is programmed or configured to carry out the recited functionality. There is a memory that stores a computer program which includes computer instructions. The computer instructions provide the logic and routines that enable the hardware to perform the method disclosed herein. The hardware includes, e.g., processing circuitry or circuitry. The computer program can be implemented in known formats as a computer-readable storage medium, a computer program product, a memory device, a record medium such as a CD-ROM or DVD, and/or the memory of a FPGAs or ASICs.

The numerals such as ordinal and cardinal numbers as used herein are all given as examples to describe the technology of the present invention in concrete terms and not intended to limit the present invention. The connection relationships between the elements are presented as examples to describe the technology of the present invention in concrete terms, and any other connection relationships may be employed to achieve the functionality taught in the present invention.

The scope of the present invention is defined by the appended claims rather than by the specification so that the present invention may be embodied in various forms without departing from the essential characteristics of the present invention. The exemplary embodiment and variants are meant to be illustrative only and not limiting as to the scope of the present invention. All changes which come within the meaning and range of equivalency of the claims are to be embraced within the scope of the claims.

### REFERENCE SIGN LIST

1: Vehicle, 10: Drive structure, 11a: Drive wheel, Rear wheel, 11b: Non-drive wheel, Front Wheel, 20: Prime mover, 30: Control circuitry, 40: Processing circuitry, 50: First sensor, Rollover sensor, 51: Swing body, 60: Second sensor, 61: Inertial sensor (second sensor), 62: Wheel speed sensor (second sensor), 621: Non-drive wheel speed sensor (second sensor), 622: Drive wheel speed sensor (second sensor), 63, 64: Stroke sensor (second sensor), 65,66: Air pressure sensor (second sensor)

## Claims

1. A rollover detection method comprising:
obtaining a detection result from a first sensor (50) that detects an amount of swing displacement of a swing body (51) that swings in response to a change in an attitude of a vehicle (1);
obtaining a detection result from at least one second sensor (60) that detects estimation information for estimating a state of the vehicle (1) independently of the first sensor (50);
determining that the vehicle (1) has rolled over upon determining that the amount of swing displacement of the swing body (51) satisfies a predetermined rollover criterion based on the detection result of the first sensor (50); and
correcting the rollover criterion based on the detection result of the second sensor (60).

2. The rollover detection method according to claim 1, wherein
the at least one second sensor (60) includes a sensor used to control a behavior of the vehicle (1) while the vehicle (1) is moving.

3. The rollover detection method according to claim 1 or 2, wherein
the at least one second sensor (60) includes a sensor used to estimate that the vehicle (1) is in an upright state while the vehicle (1) is moving.

4. The rollover detection method according to any one of claims 1 to 3, further comprising:
based on the detection result of the at least one second sensor (60), estimating whether the vehicle (1) is kept moving by rotation of a drive wheel (11a) that is rotated by transmitted drive power to move the vehicle (1), wherein
the correcting of the rollover criterion comprises, upon estimating that the vehicle (1) is kept moving by rotation of the drive wheel (11a), correcting the rollover criterion such that the vehicle (1) is less likely to be determined to have rolled over than in a case that the vehicle (1) is not kept moving by rotation of the drive wheel (11a).

5. The rollover detection method according to any one of claims 1 to 4, wherein
the vehicle (1) is a lean vehicle that tilts while turning,
the at least one second sensor (60) includes an inertial sensor (61) that detects a force applied to the vehicle (1) or the attitude of the vehicle (1), and
the rollover detection method comprises correcting the rollover criterion based on a detection result of the inertial sensor (61).

6. The rollover detection method according to any one of claims 1 to 5, wherein
the at least one second sensor (60) includes a wheel speed sensor (62) that detects a rotational speed of a non-drive wheel (11b) of the vehicle (1) or a rotational speed difference between a drive wheel (11a) of the vehicle (1) and the non-drive wheel (11b), and
the rollover detection method comprises correcting the rollover criterion based on a detection result of the wheel speed sensor (62).

7. The rollover detection method according to any one of claims 1 to 6, further comprising:
based on the detection result of the at least one second sensor (60), determining whether a moving speed of the vehicle (1) is less than a preset speed, wherein
the correcting of the rollover criterion comprises, upon determining that the moving speed of the vehicle (1) is less than the preset speed, correcting the rollover criterion such that the vehicle (1) is more likely to be determined to have rolled over than in a case that the moving speed of the vehicle (1) is equal to or higher than the preset speed.

8. The rollover detection method according to any one of claims 1 to 7, further comprising:
determining whether the detection result of the second sensor (60) has an abnormal value outside a predetermined normal range; and
upon determining that the detection result of the second sensor (60) has the abnormal value, canceling a correction made to the rollover criterion based on the detection result of the second sensor (60).

9. The rollover detection method according to any one of claims 1 to 8, further comprising:
correcting the rollover criterion based on detection results of a plurality of the second sensors (60).

10. The rollover detection method according to any one of claims 1 to 9, wherein
the rollover criterion is corrected based on the detection result of the second sensor (60) in a case that the detection result of the second sensor (60) remains corresponding to a predetermined vehicle state for a predetermined period of time.

11. A vehicle (1) comprising:
a prime mover (20);
a drive structure (10) to which drive power generated by the prime mover (20) is transmitted and that is actuated by the drive power to move the vehicle (1);
a first sensor (50) that detects an attitude of the vehicle (1);
at least one second sensor (60) that detects a parameter of the vehicle (1), the parameter being different from the attitude detected by the first sensor (50); and
control circuitry (30, 40) that controls the prime mover (20), wherein
the control circuitry (30, 40) stops the prime mover (20) upon determining that the vehicle (1) has rolled over based on detection results of both the first sensor (50) and the second sensor (60).
